# EUROPEAN PATENT SPECIFICATION

(11) **EP 3 534 562 B1**
(45) Date of publication and mention of the grant of the patent: **05.01.2022**
(21) Application number: 17875739.9
(22) Date of filing: 20.11.2017
(51) Int. Cl.: H04L 5/00, H04W 8/08, H04L 29/06, H04W 12/03, H04W 60/04, H04W 88/08, H04W 88/12, H04W 88/14

(54) **DATA TRANSMISSION METHOD, APPARATUS, AND SYSTEM, AND STORAGE MEDIUM**
DATENÜBERTRAGUNGSVERFAHREN, VORRICHTUNG UND SYSTEM SOWIE SPEICHERMEDIUM
PROCÉDÉ, APPAREIL ET SYSTÈME DE TRANSMISSION DE DONNÉES, ET SUPPORT DE STOCKAGE

(30) Priority: 29.11.2016 CN 201611073844
(43) Date of publication of application: 04.09.2019
(73) Proprietor: Huawei Technologies Co., Ltd., Longgang District Shenzhen, Guangdong 518129 (CN)
(72) Inventor: YANG, Fei, Shenzhen Guangdong 518129 (CN); MENG, Rui, Shenzhen Guangdong 518129 (CN); CHEN, Cheng, Shenzhen Guangdong 518129 (CN)
(74) Representative: Gill Jennings & Every LLP
(86) International application number: PCT/CN2017/111937
(87) International publication number: WO 2018/099291

(56) References cited:
- EP-A1- 2 442 596
- WO-A1-2005/109936
- WO-A1-2016/129238
- WO-A1-2017/028886
- CN-A- 1 613 242
- CN-A- 101 083 830
- CN-A- 101 197 795
- CN-A- 101 998 664
- CN-A- 103 188 725
- US-A1- 2016 150 383

## Description

### TECHNICAL FIELD

This application relates to the field of communications technologies, and in particular, to a data transmission method, apparatus, and system, and a storage medium.

### BACKGROUND

A data transmission system generally includes user equipment (English: User Equipment, UE for short) and a network device. After the UE is attached to a network (that is, a process in which the UE is connected to the network), the network device may provide a network service for the UE. For example, the network device may provide a data transmission service for the UE.

Currently, after being powered on, the UE needs to send an attach request to the network device to attach to the network. After receiving the attach request of the UE, the network device establishes context information of the UE, and then stores the context information of the UE. When the UE needs to send data, the UE sends the data to the network device, and the network device forwards the data of the UE based on the context information of the UE that is stored in the network device. The network device may include a radio access network (English: Radio Access Network, RAN for short) device, a mobility management entity (English: Mobility Management Entity, MME for short), a service capability exposure function (English: Service Capability Exposure Function, SCEF for short) entity, and the like. The context information of the UE may include information about a RAN device in an area in which the UE is located, information about an MME that is configured to manage the RAN device, information about an SCEF entity that provides a network service access function for a third-party device (such as a server), and the like.

However, to provide a network service for the UE, the network device needs to store the context information of the UE all the time before the UE is detached from the network (that is, a process in which the UE is disconnected from the network), and consequently the context information of the UE occupies a storage resource of the network device for a long time. Therefore, a requirement for a capacity of the network device in a data transmission process is relatively high.

EP2442596A1 relates to method and apparatus for providing distributed mobility management in a network.

WO2005109936 relates to an arrangement and a method for operator assignment in a shared network environment. US2016150383 relates to network nodes, methods performed therein, computer programs and a computer readable storage medium. WO2017028886 relates to a node and method for handling a mobility procedure for a wireless device.

### SUMMARY

Implementations of this application provide a data transmission method, apparatus, and system, and a storage medium, to resolve a problem of a relatively high requirement for a capacity of a network device in a data transmission process. The technical solutions are as follows.

The invention has been defined in the independent claims. Further specific technical features have been defined in the dependent claims.

In the solution provided in this application, the target context information is stored by the server, and the network device obtains the target context information from the server when the target data needs to be forwarded, and deletes the target context information after the target data is forwarded. Therefore, the target context information does not occupy a storage resource of the network device for a long time, and a requirement for a capacity of the network device in a data transmission process is lowered.

The technical solutions provided in the implementations of this application bring the following beneficial effects:

When receiving the target data associated with the user equipment, the network device obtains the target context information of the user equipment from the server, then forwards the target data based on the target context information, and deletes the target context information after forwarding. The target context information is stored by the server, and the network device obtains the target context information from the server when the target data needs to be forwarded, and deletes the target context information after the target data is forwarded. Therefore, the target context information does not occupy a storage resource of the network device for a long time, a problem of a relatively high requirement for a capacity of the network device in a data transmission process is resolved, and the requirement for a capacity of the network device in a data transmission process is lowered.

### BRIEF DESCRIPTION OF DRAWINGS

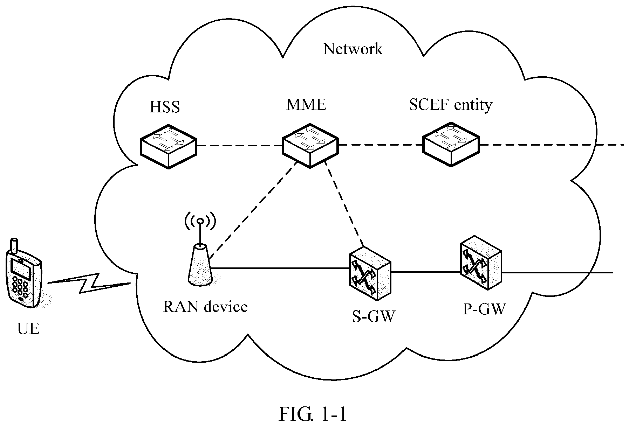

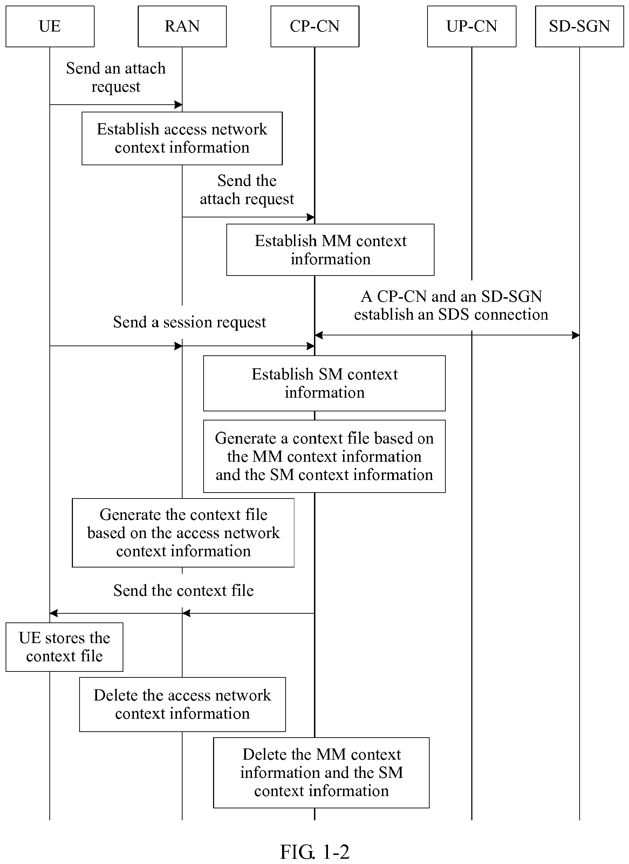

FIG 1-1 is a diagram of a network architecture according to the prior art;
FIG 1-2 is a flowchart of a method for attaching user equipment to a network according to the prior art;
FIG 2 is a schematic structural diagram of an implementation environment related in implementations of this application;
FIG 3-1A and FIG. 3-1B are a flowchart of a data transmission method according to an implementation of this application;
FIG. 3-2 is a flowchart of a method for attaching user equipment to a network according to an implementation of this application;
FIG. 3-3A to FIG. 3-3C are a flowchart of a tracking area update method for user equipment according to an implementation of this application;

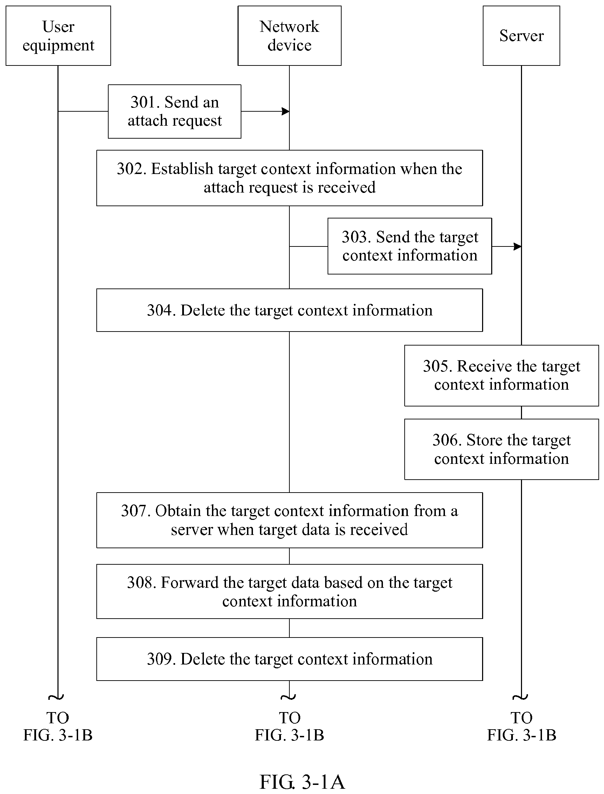

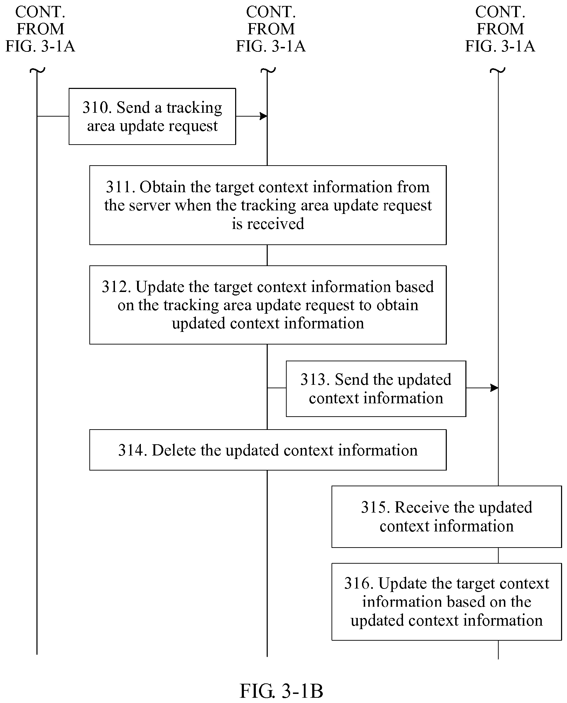

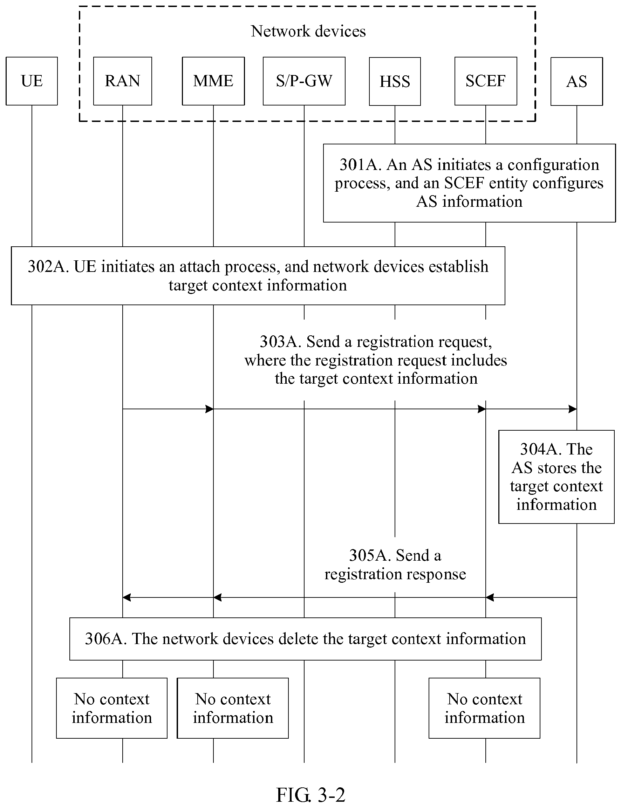

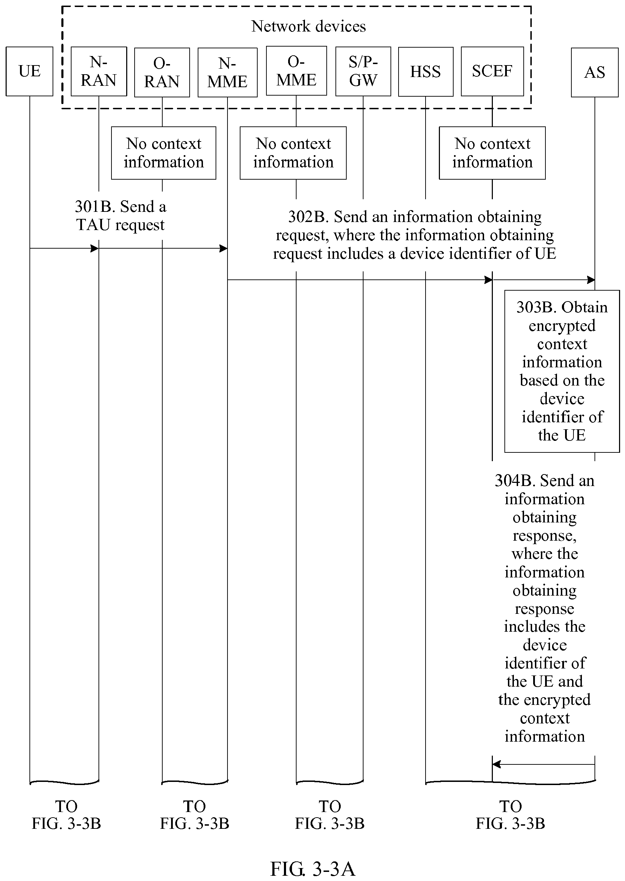

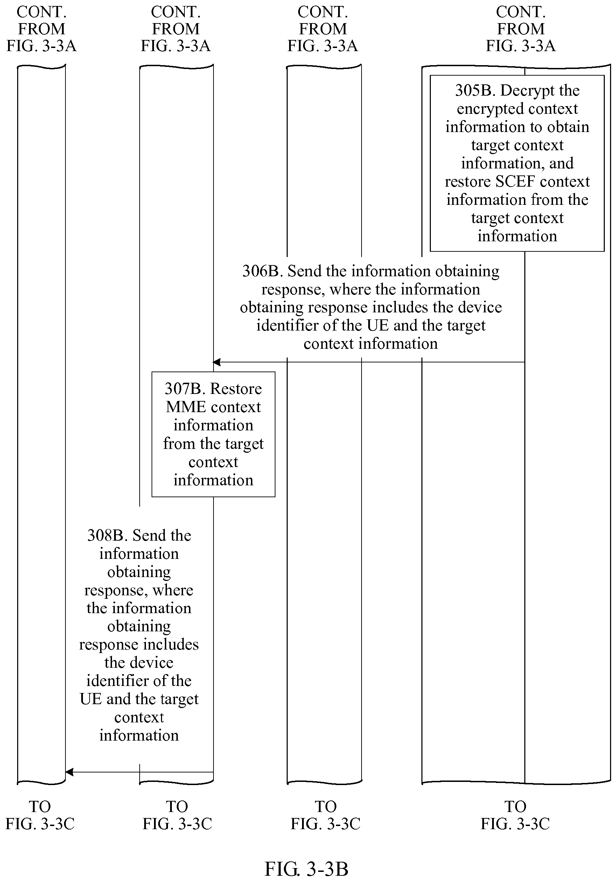

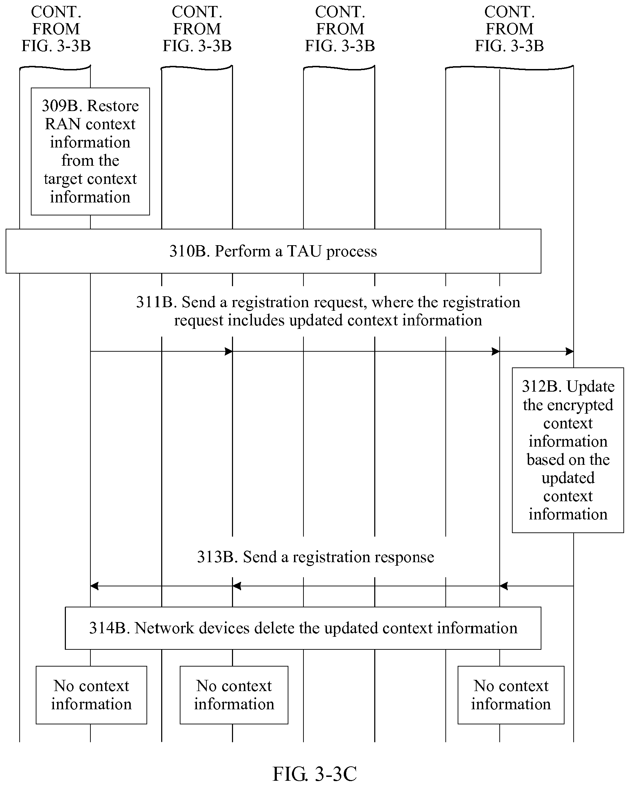

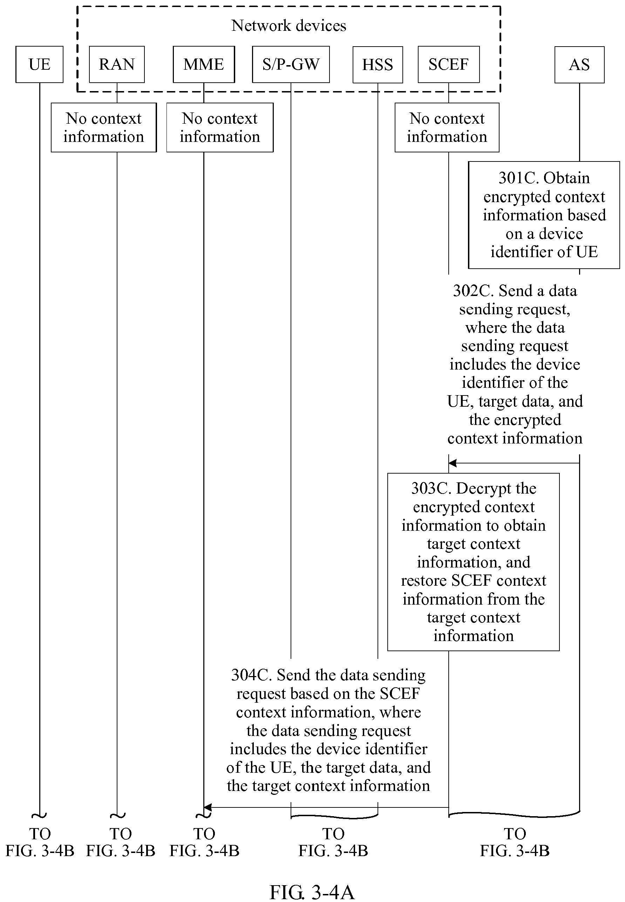

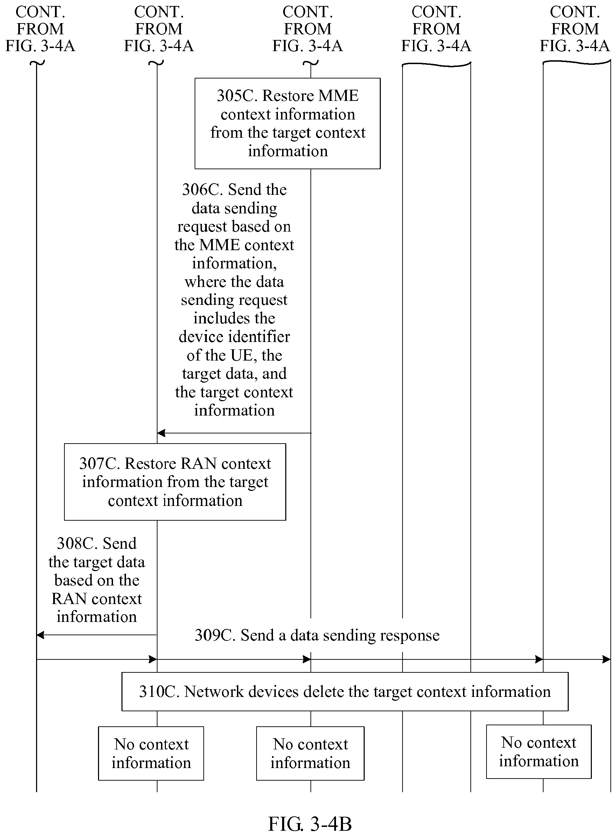

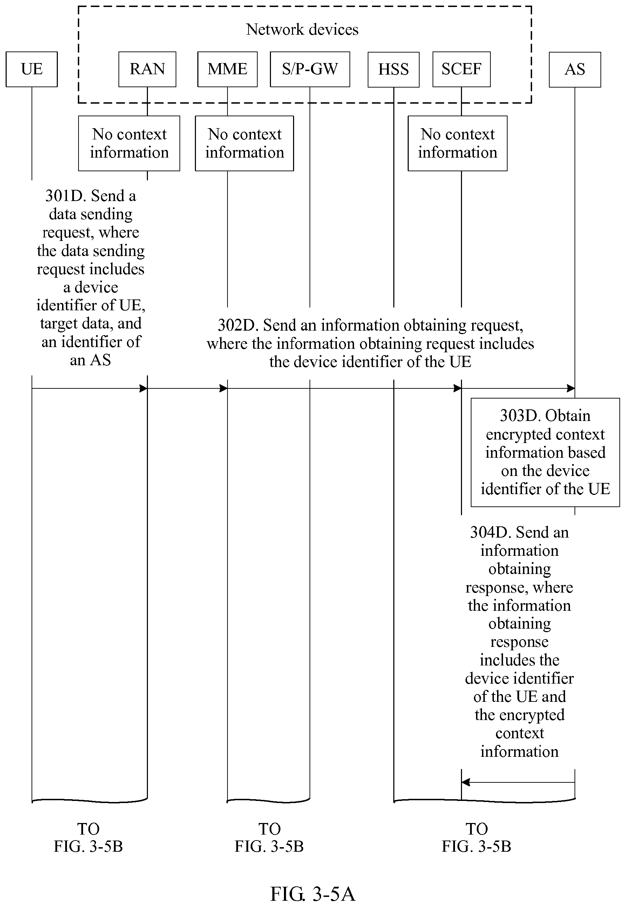

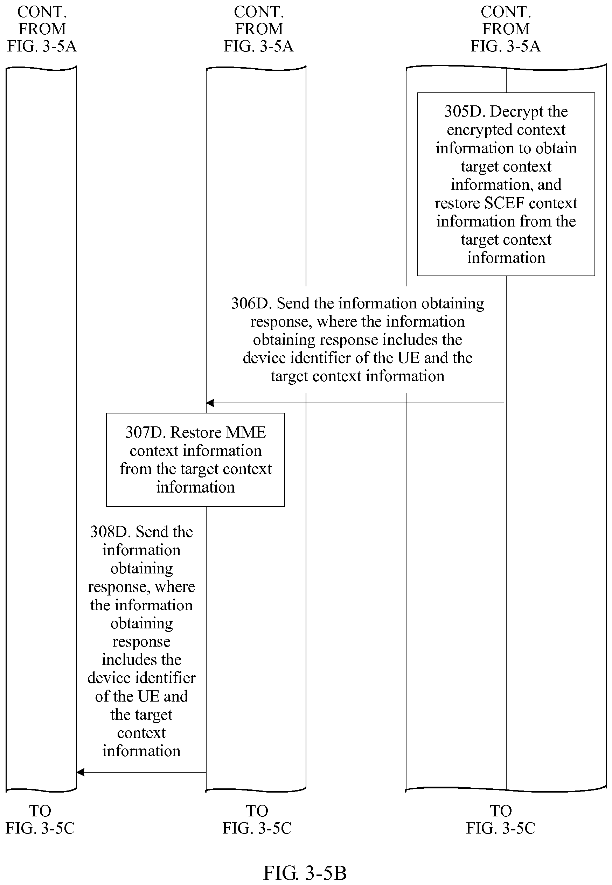

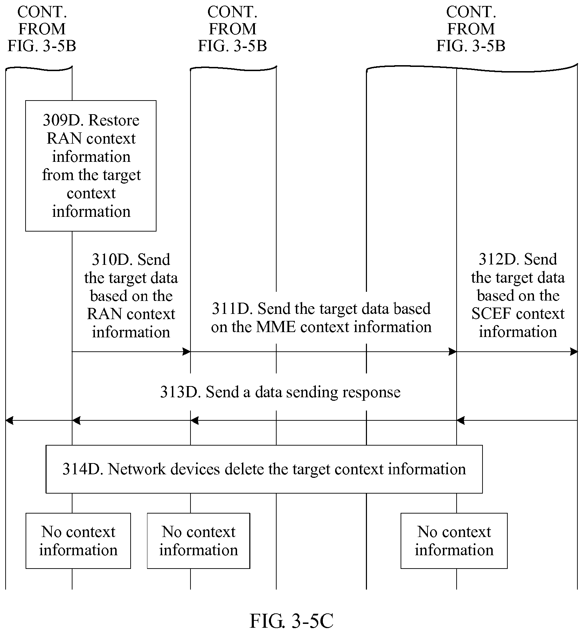

FIG. 3-4A and FIG. 3-4B are a flowchart of a data transmission method for an MT service according to an implementation of this application;
FIG. 3-5A to FIG. 3-5C are a flowchart of a data transmission method for an MO service according to an implementation of this application;

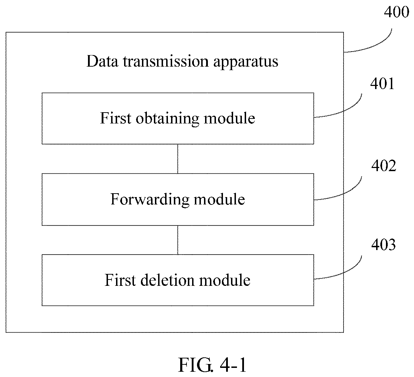

FIG. 4-1 is a block diagram of a data transmission apparatus according to an implementation of this application;

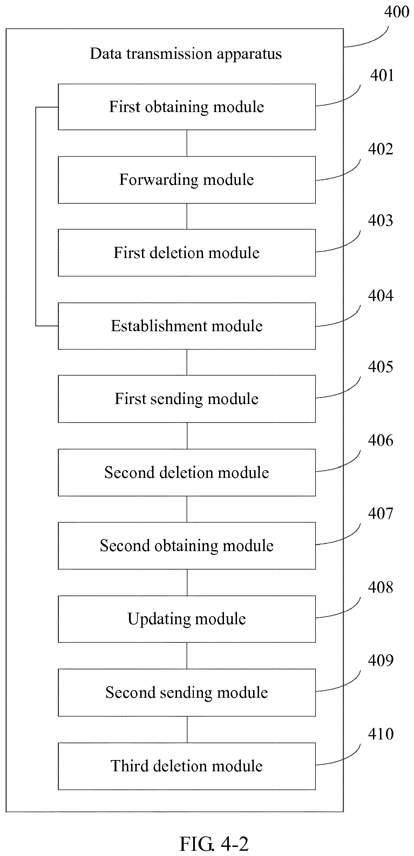

FIG. 4-2 is a block diagram of another data transmission apparatus according to an implementation of this application;

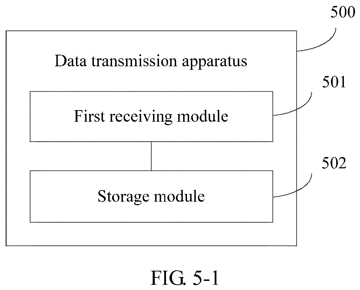

FIG. 5-1 is a block diagram of still another data transmission apparatus according to an implementation of this application;

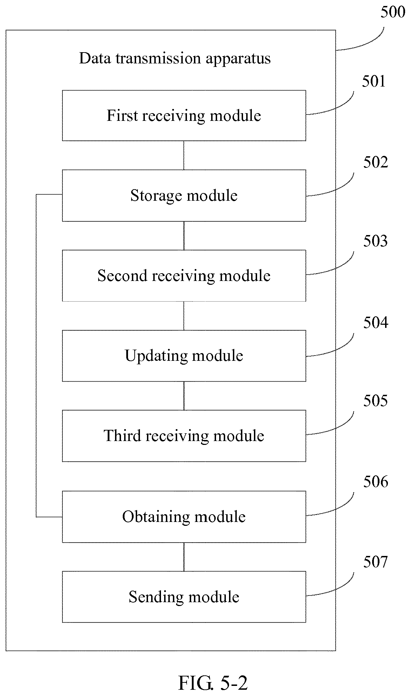

FIG. 5-2 is a block diagram of yet another data transmission apparatus according to an implementation of this application;

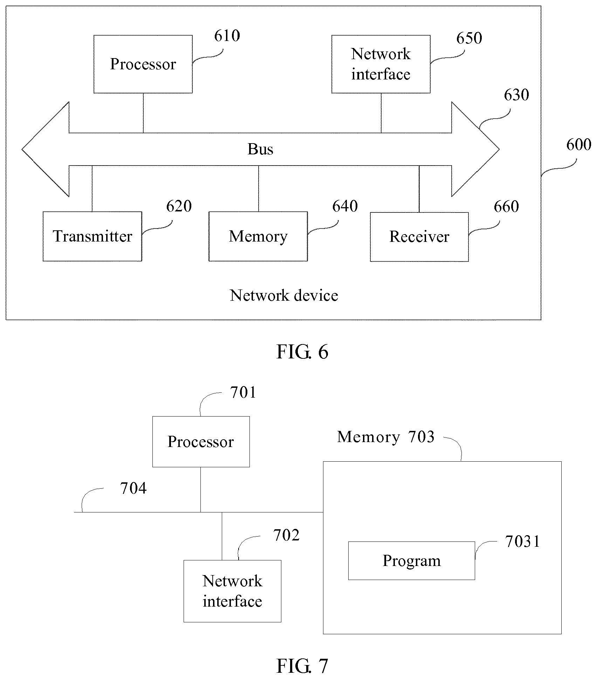

FIG. 6 is a schematic structural diagram of a network device according to an implementation of this application;
FIG. 7 is a schematic structural diagram of a server according to an implementation of this application; and

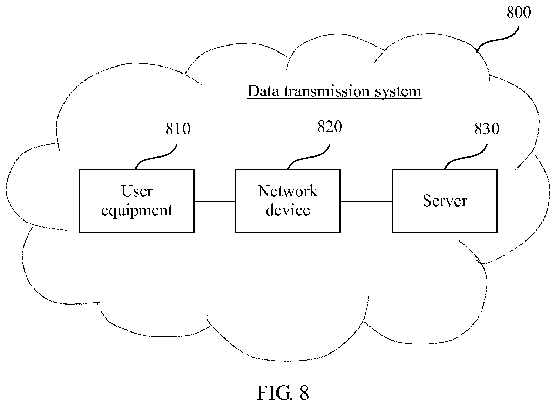

FIG. 8 is a schematic structural diagram of a data transmission system according to an implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

A big connection (massive user equipments are connected to a network) is an important requirement of a fifth generation (English: Fifth Generation, 5G for short) communications system. The big connection may include an Internet of Things (English: Internet of Things, IoT for short) connection. It is estimated that by 2020, there will be more than 200 billion IoT connections. User equipment in the IoT connection may be referred to as an IoT device, and data sent by the IoT device is mainly small data (a data packet that is less than 256 bytes). The 3rd Generation Partnership Project (English: 3rd Generation Partnership Project, 3GPP for short) is currently working on standardization of a 5G architecture. A key requirement of the 5G architecture is a session management (English: Session Management, SM for short) requirement. The 5G architecture relates to effective transmission of small data, and specifically, to effective transmission of infrequent small data.

Referring to FIG. 1-1, FIG. 1-1 is a diagram of a network architecture according to the prior art. The network architecture may be specifically a Long Term Evolution (English: Long Term Evolution, LTE for short) network architecture, and the LTE network architecture serves a mobile broadband service. The LTE network architecture is mainly oriented to a service with a relatively large data volume, such as a voice call and an Internet access.

Referring to FIG. 1-1, the network architecture includes UE and a network that provides a network service for the UE. The network includes network devices, and the network devices specifically include a RAN device, a serving gateway (English: Serving Gateway, S-GW for short), a packet data network gateway (English: Packet Data Network Gateway, P-GW for short), an MME, an SCEF entity, and a home subscriber server (English: Home Subscriber Server, HSS for short). Among the network devices, the S-GW and the P-GW are user plane-core network (English: User Plane-Core Network, UP-CN for short) devices, and the MME and the HSS are control plane-core network (English: Control Plane-Core Network, CP-CN for short) devices.

In the network architecture shown in FIG. 1-1, the UE needs to attach to the network after being powered on. In a process of attaching the UE to the network, all the network devices need to establish and store corresponding context information. When target data related to the UE (the target data is sent by or is to be received by the UE) needs to be forwarded, each network device forwards the target data based on the context information stored by the network device. However, in the solution, each network device needs to store the corresponding context information all the time before the UE is detached from the network, and consequently the context information occupies a storage resource of the network device for a long time. In addition, because the context information is relatively large, storage of the context information requires a lot of memory consumption of the network devices, expansion costs of the network devices are increased, and it is difficult to satisfy a requirement for a big connection in a 5G communications system. In addition, in the 5G communications system, there are many IoT devices that mainly transmit small data, and average revenue per user (English: Average Revenue Per User, ARPU for short) of an IoT user is extremely low (for example, ARPU of a Sigfox user is 1 dollar per year). Therefore, in the foregoing solution, for the IoT system, resource utilization is low, system scalability is poor, and costs are relatively high.

The foregoing solution is improved by using a Cellular Internet of Things (English: cellular based Internet of Things, cloT for short) technology that is being standardized. Specifically, in the cloT technology, signaling is used to transmit small data. However, in the solution, the network devices still need to store the context information, and a problem of expansion costs of the network device cannot be resolved.

In view of this, Qualcomm puts forward a context cookie-based (a context file or a context cookie, where a cookie in a webpage refers to a file stored at a client end, and the file may be used to store status information of a current user) stateless mechanism solution (for the solution, refer to 3GPP TR23.799 6.3.5). In the solution, after the network device establishes context information, the network device generates a context cookie based on the context information, and sends the context cookie to the UE, the UE stores the context cookie, and then the network device deletes the context information. When the UE needs to send data, the UE sends both the data and the context cookie to the network device. After restoring the context information based on the context cookie, the network device forwards the data based on the context information. A specific process of the solution is shown in FIG. 1-2. A RAN in FIG. 1-2 represents a RAN device, a CP-CN may be an MME, a UP-CN may be an S-GW and a P-GW, and a small data serving gateway node (English: Small Data Serving Gateway Node, SD-SGN for short) may be an SCEF entity.

Referring to FIG. 1-2, after being powered on, the UE sends an attach request to the RAN device. The RAN device establishes access network context information (RAN_Context) after receiving the attach request sent by the UE, and then the RAN device sends the attach request to the CP-CN. The CP-CN establishes mobility management (English: Mobility Management, MM for short) context information, and then the CP-CN and the SD-SGN establish a small data serving (English: Small Data Serving, SDS for short) connection. After the SDS connection is established, the UE sends a session request to the CP-CN by using the RAN device. After receiving the session request, the CP-CN establishes SM context information, and generates a context cookie based on the MM context information and the SM context information. The RAN device may also generate a context cookie based on the access network context information. Then the CP-CN sends the context cookie to the RAN device. The RAN device sends both the received context cookie and the context cookie generated by the RAN device to the UE. The UE enters an idle mode after storing the context cookies. The RAN device deletes the access network context information after sending the context cookie, and the CP-CN deletes the MM context information and the SM context information after sending the context cookie. When the UE needs to send data, the UE sends both the data and the context cookies (including the context cookie generated by the RAN device and the context cookie generated by the CP-CN) to the RAN device. The RAN device restores, based on the context cookie, the context information established by the RAN device, and then sends both the data and the context cookie generated by the CP-CN to the CP-CN based on the context information established by the RAN device. The CP-CN restores the context information based on the context cookie, and then sends the data to the SD-SGN based on the context information, and the SD-SGN forwards the data.

The context cookie-based stateless mechanism solution put forward by Qualcomm resolves the problem of expansion costs of the network device. However, in the solution, the UE stores the context information, and therefore the context cookie-based stateless mechanism solution is applicable to only an MO service, but is not applicable to an MT service. In addition, the UE communicates with the network device by using an air interface. In the context cookie-based stateless mechanism solution, the UE further needs to send a context cookie to the network device when sending data to the network device by using the air interface. The data is relatively small while the context cookie is relatively large. Consequently, in a data transmission process, the context cookie occupies a relatively large quantity of air interface resources, data transmission efficiency is relatively low, and power consumption of the UE in data transmission is increased. Therefore, the solution can hardly be applicable to a small data transmission scenario of the IoT. In addition, the air interface can be listened on, and therefore there is a hidden security risk in a context cookie transmission process.

To resolve the problems in the foregoing solutions, the implementations of this application provide a data transmission method, apparatus, and system, and a storage medium. In the implementations of this application, a server stores context information, and a network device obtains the context information from the server when data needs to be forwarded, and deletes the context information after data is forwarded. In this way, expansion costs of the network device can be reduced, and the problems in the context cookie-based stateless mechanism solution are resolved. For the storage medium and the data transmission method, apparatus, and system provided in the implementations of this application, refer to descriptions in the following implementations.

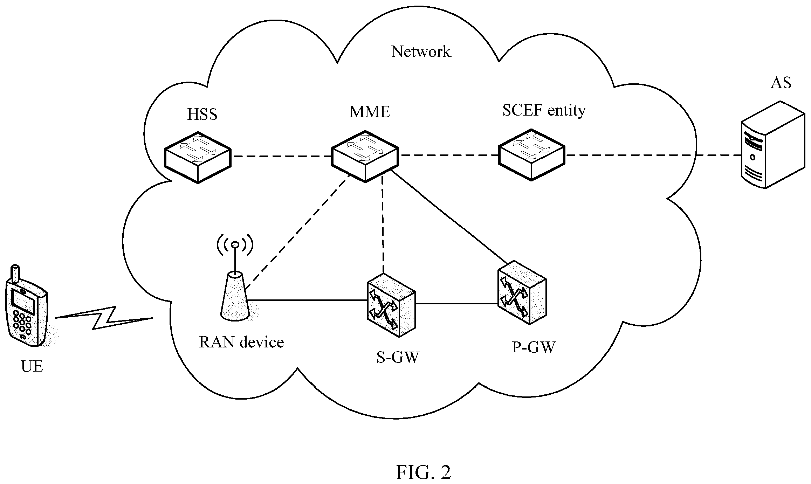

Referring to FIG. 2, FIG. 2 is a schematic structural diagram of an implementation environment related in the implementations of the present disclosure. The implementation environment provides a data transmission system, including user equipment (English: User Equipment, UE for short), a server, and a network that provides a network service for the UE. The network includes network devices, and the network devices specifically include a RAN device, an S-GW, a P-GW, an MME, an SCEF entity, and an HSS. The server may be specifically an application server (English: Application Server, AS for short). Among the network devices, the S-GW and the P-GW are UP-CN devices, and are responsible for forwarding data. The MME and the HSS are CP-CN devices, and the MME is configured to manage the RAN device. The SCEF entity is configured to provide a network service access function for a third-party device (for example, the server). The HSS is configured to provide user information of the UE for the MME

In the implementation environment, in a process in which the UE attaches to the network, the network devices such as the RAN device, the MME, and the SCEF entity may establish target context information of the UE, and then send the target context information to the AS, the AS stores the target context information, and then the network devices delete the target context information. When receiving target data associated with the UE, the network device such as the RAN device may obtain the target context information from the AS, then forward the target data based on the target context information, and delete the target context information after forwarding. In this way, the target context information does not occupy a storage resource of the network device for a long time, and a requirement for a capacity of the network device in a data transmission process is lowered.

The target data may be sent by the UE to the AS, and may also be sent by the AS to the UE. Therefore, the solution provided in the implementations of this application is applicable to an MO service and an MT service. When sending the target context information to the AS, the network device may encrypt the target context information to obtain encrypted context information, and then send the encrypted context information to the AS. In this way, transmission security of the target context information is improved.

Referring to FIG. 3-1A and FIG. 3-1B, FIG. 3-1A and FIG. 3-1B are a flowchart of a data transmission method according to an implementation of this application. In this implementation, that the data transmission method is applied to the implementation environment shown in FIG. 2 is used as an example for description. User equipment described in FIG. 3-1A and FIG. 3-1B is the UE in the implementation environment shown in FIG. 2, and network devices include the RAN device, the MME, and the SCEF entity in the implementation environment shown in FIG. 2. Unless otherwise specified, a server described in FIG. 3-1A and FIG. 3-1B is the AS in the implementation environment shown in FIG. 2. Referring to FIG. 3-1A and FIG 3-1B, the data transmission method includes the following steps.

Step 301: The user equipment sends an attach request to a network device.

In this implementation of this application, the user equipment may send the attach request to the network device under a specific trigger condition. The attach request may include a device identifier of the user equipment. The device identifier of the user equipment may be a phone number of a user, which includes but is not limited to an international mobile subscriber identity (English: International Mobile Subscriber Identity, IMSI for short), a mobile subscriber integrated service digital network (English: Mobile Subscriber Integrated Service Digital Network, MSISDN for short) number, and a mobile equipment (English: Mobile Equipment, ME for short) identifier. The trigger condition includes but is not limited to that the user equipment switches from a disabled state to an enabled state, and the user equipment switches from an offline mode to a normal communication mode. The normal communication mode is a mode in which the user equipment can transmit data. For example, the user equipment is a mobile phone, and the normal communication mode is a mode in which the mobile phone can make a call. This is not limited in this implementation of this application.

Optionally, the user equipment may send the attach request to the network device by using an air interface. In this implementation of this application, the network device may be the RAN device, the MME, or the SCEF entity. When the network device is the RAN device, the user equipment directly sends the attach request to the RAN device by using the air interface. When the network device is the MME, the user equipment sends the attach request to the MME by using the RAN device. Specifically, the user equipment sends the attach request to the RAN device by using the air interface, and the RAN device forwards the attach request to the MME.

When the network device is the SCEF entity, the user equipment sends the attach request to the SCEF entity by using the RAN device and the MME successively. Specifically, the user equipment sends the attach request to the RAN device by using the air interface, the RAN device forwards the attach request to the MME, and then the MME forwards the attach request to the SCEF entity.

Step 302: The network device establishes target context information when receiving the attach request sent by the user equipment.

The target context information is context information of the user equipment, and the target context information may include RAN context information, MME context information, and SCEF context information. When the user equipment sends the attach request to the network device, the network device may receive the attach request sent by the user equipment, and then establish the target context information. Optionally, the network device may establish the target context information based on the device identifier of the user equipment in the attach request.

When the network device is the RAN device, the RAN device receives the attach request sent by the user equipment, and then establishes the RAN context information. The RAN context information may include the device identifier of the user equipment and a radio resource control (English: Radio Resource Control, RRC for short) context, and the RRC context includes location information of the user equipment, air interface resource information, and the like. For specific content of the RRC context, refer to the prior art. Details are not described herein in this implementation of this application.

When the network device is the MME, the MME receives the attach request sent by the user equipment by using the RAN device, and then establishes the MME context information based on the attach request. The MME context information may include the device identifier of the user equipment, mobility management information, authentication encryption information, location information of the user equipment, an identifier of the SCEF entity that provides a service access function for the MME, and the like. The RAN device may directly forward the attach request to the MME, or may add the RAN context information to the attach request, and then send the attach request to the MME. This is not limited in this implementation of this application.

When the network device is the SCEF entity, the SCEF entity receives the attach request sent by the user equipment by using the RAN device and the MME, and then establishes the SCEF context information based on the attach request. The SCEF context information may include the device identifier of the user equipment, an identifier of an evolved packet system (English: Evolved Packet System, EPS for short) bearer, serving node information, AS information, and the like. The RAN device and the MME may directly forward the attach request to the SCEF entity, or may add the RAN context information and the MME context information to the attach request, and then send the attach request to the SCEF entity. This is not limited in this implementation of this application.

In this implementation of this application, for example, the user equipment sends the attach request to the RAN device. The RAN device establishes the RAN context information, adds the RAN context information to the attach request, and then sends the attach request to the MME. After establishing the MME context information, the MME adds the MME context information and the RAN context information to the attach request, and then sends the attach request to the SCEF entity. The SCEF entity establishes the SCEF context information, and obtains the target context information based on the RAN context information, the MME context information, and the SCEF context information.

Step 303: The network device sends the target context information to the server.

After establishing the target context information, the network device may send the target context information to the server, so that the server stores the target context information. To improve transmission security of the target context information, the network device may encrypt the target context information to obtain encrypted context information, and then send the encrypted context information to the server.

In this implementation of this application, the network device needs to register with the server, and then can communicate with the server, and the network device needs to send a registration request to the server to register with the server. Therefore, the network device may add the target context information to the registration request, and send the registration request to the server. When the network device is the RAN device, the RAN device sends the RAN context information to the server by using the MME and the SCEF entity. When the network device is the MME, the MME sends the MME context information to the server by using the SCEF entity. When the network device is the SCEF entity, the SCEF entity directly sends the SCEF context information to the server. For example, the RAN device may send the RAN context information to the MME. The MME sends the MME context information and the RAN context information to the SCEF entity. The SCEF entity obtains the target context information based on the RAN context information, the MME context information, and the SCEF context information, then encrypts the target context information to obtain the encrypted context information, adds the encrypted context information to the registration request, and sends the registration request to the server. The registration request may further include the device identifier of the user equipment and information about the SCEF entity. The device identifier of the user equipment and the information about the SCEF entity are plain (unencrypted). The registration request includes the device identifier of the user equipment, so that the server can store the encrypted context information. The registration request includes the information about the SCEF entity, so that the server can search for the SCEF entity when sending data to the user equipment, so as to implement an MT service.

Step 304: The network device deletes the target context information.

After sending the target context information to the server, the network device may delete the target context information. The network device may delete the target context information immediately after sending the target context information to the server, or may delete the target context information after a specific aging time. This is not limited in this implementation of this application.

For example, in this implementation of this application, when the network device is the RAN device, the MME, or the SCEF entity, the RAN device deletes the RAN context information, the MME deletes the MME context information, and the SCEF entity deletes the SCEF context information. When the RAN device sends the RAN context information to the MME, the MME may further delete the RAN context information. When the MME sends the RAN context information and the MME context information to the SCEF entity, the SCEF entity may further delete the RAN context information and the MME context information. Details are not described herein in this implementation of this application.

Step 305: The server receives the target context information sent by the network device.

When the network device sends the target context information to the server, the server may receive the target context information sent by the network device. Optionally, because the network device may add the target context information to the registration request, and send the registration request to the server, the server may receive the target context information by receiving the registration request sent by the network device. Specifically, the server may receive the registration request sent by the network device. The registration request includes the target context information and the device identifier of the user equipment, and the target context information may be encrypted. In this case, the registration request may further include the information about the SCEF entity. This is not limited in this implementation of this application.

When the network device is the RAN device, the server receives the RAN context information sent by the RAN device by using the MME and the SCEF entity. When the network device is the MME, the server receives the MME context information sent by the MME by using the SCEF entity. When the network device is the SCEF entity, the server receives the SCEF context information sent by the SCEF entity. For example, as described in step 303, the RAN device may send the RAN context information to the MME. The MME sends the MME context information and the RAN context information to the SCEF entity. The SCEF entity obtains the target context information based on the RAN context information, the MME context information, and the SCEF context information, then encrypts the target context information to obtain the encrypted context information, adds the encrypted context information to the registration request, and sends the registration request to the server. Therefore, in step 305, the server receives the registration request sent by the SCEF entity, and the registration request includes the encrypted context information, the device identifier of the user equipment, and the information about the SCEF entity.

Step 306: The server stores the target context information.

After receiving the target context information, the server may store the target context information. Because the server may receive the encrypted context information obtained after the network device encrypts the target context information, that the server stores the target context information is that the server stores the encrypted context information. Optionally, the server may store the encrypted context information based on the device identifier of the user equipment. In this implementation of this application, the server stores a correspondence between a device identifier and context information. The server may add the received encrypted context information to the correspondence based on the device identifier of the user equipment. Alternatively, the server may establish a correspondence between a device identifier and context information based on the device identifier of the user equipment and the encrypted context information. This is not limited in this implementation of this application. For example, information stored in the server may be shown in the following Table 1, and Table 1 includes the encrypted context information.

**Table 1**

| **Field 1** | **Field 2** | **Field 3** | **Remarks** |
|---|---|---|---|
| UE_ID | Phone number | | IMSI, MSISDN, and ME identifier |
| Information about an SCEF entity | SCEF_ID | | Used to search for the SCEF entity |
| Encrypted context information (target context information) | SCEF context information | UE_ID | |
| | | EPS bearer ID | |
| | | Serving node information | MME address |
| | | AS information | AS address |
| | MME context information | UE_ID | |
| | | MM information | MM state |
| | | Authentication encryption information | |
| | | Location information of UE | Tracking area information and cell identity |
| | | SCEF_ID | |
| | RAN context information | UE_ID | |
| | | RRC context | |

Referring to Table 1, the information stored in the server includes three fields: the field 1, the field 2, and the field 3, and the remarks. Content of the field 2 is specific content of the field 1, content of the field 3 is specific content of the field 2, and content in the remarks is used to explain content in the field 2 and/or the field 3. The field 1 includes the user equipment identity (English: User Equipment Identity, UE_ID for short), the information about the SCEF entity, and the encrypted context information. The UE_ID indicates the device identifier of the user equipment, and the content corresponding to the UE_ID in the field 2 is the phone number, which includes but is not limited to the IMSI, the MSISDN, and the ME identifier. The content corresponding to the information about the SCEF entity in the field 2 is the SCEF_ID, and the SCEF_ID is used to search for the SCEF entity. The content corresponding to the encrypted context information in the field 2 includes the SCEF context information, the MME context information, and the RAN context information. The SCEF context information includes the UE_ID, the EPS bearer ID (that is, the identifier of the EPS bearer in step 302), the serving node information, and the AS information. The serving node information may be the MME address, and the AS information may be the AS address. The MME context information includes the UE_ID, the MM information, the authentication encryption information, the location information of the UE, and the SCEF ID. The MM information may be the MM state, and the location information of the UE may be the tracking area information, the cell identity, and the like. The RAN context information includes the UE_ID and the RRC context. The RRC context may include the UE-ID, the serving node information, and the like. This is not limited in this implementation of this application.

It should be noted that the content of the context information shown in the foregoing Table 1 is merely an example. In actual application, the context information may include more content. Specific content included in the context information is described in detail in the prior art, and details are not described herein in this implementation of this application.

Step 307: The network device obtains the target context information from the server when receiving target data.

When the network device receives the target data, the network device may obtain the target context information from the server. The target data is data associated with the user equipment. Specifically, the target data may be from the user equipment and point to the server, or may be from the server and point to the user equipment. In other words, the target data may be sent by the user equipment to the server, or may be sent by the server to the user equipment.

When the target data is from the user equipment and points to the server, the target data may be sent by the user equipment to the network device by using a data sending request. The data sending request further includes the device identifier of the user equipment. In this case, the network device may obtain the device identifier of the user equipment from the data sending request when receiving the data sending request of the user equipment, and then obtain the target context information from the server based on the device identifier of the user equipment. When the target data is from the server and points to the user equipment, the target data may be sent by the server to the network device by using a data sending request. The data sending request may include the target context information. In this case, when receiving the data sending request sent by the server, the network device may directly obtain the target context information from the data sending request. When the target data is from the server and points to the user equipment, the server may query, based on the device identifier of the user equipment, the correspondence that is between a device identifier and context information and that is stored by the server, to obtain the target context information, then add the target data and the target context information to the data sending request, and send the data sending request to the network device. Because the server stores the encrypted context information obtained after the network device encrypts the target context information, the data sending request sent by the server to the network device carries the encrypted context information. This is not limited in this implementation of this application.

In the following content in this step, that the target data is from the user equipment and points to the server is used as an example for description. Specifically, when the target data is from the user equipment and points to the server, the network device obtains the device identifier of the user equipment from the data sending request when receiving the data sending request sent by the user equipment, and then sends an information obtaining request that carries the device identifier of the user equipment to the server. The server queries, based on the device identifier of the user equipment, the correspondence that is between a device identifier and context information and that is stored by the server, to obtain the target context information, then adds the target context information to an obtaining response, and sends the obtaining response to the network device, so that the network device parses the obtaining response to obtain the target context information. In this implementation of this application, because the server stores the encrypted context information obtained after the network device encrypts the target context information, the server obtains the encrypted context information through querying.

When the network device is the RAN device, the RAN device sends the information obtaining request to the server by using the MME and the SCEF entity successively, and correspondingly the server sends the obtaining response to the RAN device by using the SCEF entity and the MME successively. When the network device is the MME, the MME sends the information obtaining request to the server by using the SCEF entity, and correspondingly the server sends the obtaining response to the MME by using the SCEF entity. When the network device is the SCEF entity, the SCEF entity directly sends the information obtaining request to the server, and the server directly sends the obtaining response to the SCEF entity. In this implementation of this application, the information stored in the server is shown in the foregoing Table 1. The server may obtain the information shown in the foregoing Table 1 by querying, based on the device identifier of the user equipment, the correspondence that is between a device identifier and context information and that is stored by the server. The server may obtain the SCEF_ID from the information shown in the foregoing Table 1, and the server may send the obtaining response to the SCEF entity based on the SCEF ID. The obtaining response may include information shown in the following Table 2.

**Table 2**

| **Field 1** | **Field 2** | **Field 3** | **Remarks** |
|---|---|---|---|
| UE_ID | Phone number | | IMSI, MSISDN, and ME identifier |
| Encrypted context information (target context information) | SCEF context information | UE_ID | |
| | | EPS bearer ID | |
| | | Serving node information | MME address |
| | | AS information | AS address |
| | MME context information | UE_ID | |
| | | MM information | MM state |
| | | Authentication encryption information | |
| | | Location information of UE | Tracking area information and cell identity |
| | | SCEF_ID | |
| | RAN context information | UE_ID | |
| | | RRC context | |

After receiving the obtaining response sent by the server, the SCEF entity obtains the information in Table 2 from the obtaining response. Then the SCEF entity may determine a decryption key for the encrypted context information in Table 2 based on the device identifier of the user equipment (UE_ID), decrypt, based on the decryption key, the encrypted context information shown in Table 2 to obtain the plain target context information, restore the SCEF context information from the target context information, and send the obtaining response to the MME based on the MME address in the SCEF context information. The obtaining response may include information shown in the following Table 3.

**Table 3**

| **Field 1** | **Field 2** | **Field 3** | **Remarks** |
|---|---|---|---|
| Target context information | MME context information | UE_ID | IMSI, MSISDN, and ME identifier |
| | | MM information | MM state |
| | | Authentication encryption information | |
| | | Location information of UE | Tracking area information and cell identity |
| | | SCEF_ID | Used to search for the SCEF entity |
| | RAN context information | UE_ID | |
| | | RRC context | |

After receiving the obtaining response sent by the SCEF entity, the MME obtains the information shown in Table 3 from the obtaining response, restores the MME context information from the target context information, then determines, based on the location information of the UE in the MME context information, an address of the RAN device that provides a network access service for the UE, and sends the obtaining response to the RAN device based on the address of the RAN device. The obtaining response may include information shown in the following Table 4.

**Table 4**

| **Field 1** | **Field 2** | **Field 3** | **Remarks** |
|---|---|---|---|
| Target context information | RAN context information | UE_ID | IMSI, MSISDN, and ME identifier |
| | | RRC context | |

After receiving the obtaining response sent by the MME, the RAN device obtains the information shown in Table 4 from the obtaining response, and restores the RAN context information from the target context information. Therefore, each network device obtains corresponding context information.

Step 308: The network device forwards the target data based on the target context information.

After obtaining the target context information, the network device may forward the target data based on the target context information. The target data is sent by the user equipment or the server to the network device by using the data sending request, and the data sending request carries the device identifier of the user equipment. When the target data is from the user equipment and points to the server, the network device forwards the target data and the device identifier of the user equipment to the server based on the target context information. When the target data is from the server and points to the user equipment, the network device forwards the target data to the user equipment based on the target context information.

For example, referring to Table 1 to Table 4, when the target data is from the user equipment and points to the server, the user equipment may send the data sending request to the RAN device, and the data sending request includes the device identifier of the user equipment and the target data. When receiving the data sending request, the RAN device determines the RAN context information shown in Table 4 based on the device identifier of the user equipment in the data sending request, and then forwards the data sending request to the MME based on the RAN context information. When receiving the data sending request, the MME obtains the MME context information shown in Table 3 based on the device identifier of the user equipment in the data sending request, and then forwards the data sending request to the SCEF entity based on the SCEF_ID in the MME context information. When receiving the data sending request, the SCEF entity obtains the SCEF context information shown in Table 2 based on the device identifier of the user equipment in the data sending request, and then sends the target data in the data sending request to the server based on the AS information in the SCEF context information. Finally, the server may receive the target data.

For example, referring to Table 1 to Table 4, when the target data is from the server and points to the user equipment, the server may query, based on the device identifier of the user equipment, the correspondence that is between a device identifier and context information and that is stored by the server, to obtain the information shown in Table 1. Table 1 includes the encrypted context information, the device identifier of the user equipment (UE_ID), and the information about the SCEF entity. Then the server adds the device identifier of the user equipment, the encrypted context information, and the target data to the data sending request, and sends the data sending request to the SCEF entity based on the information about the SCEF entity. When receiving the data sending request, the SCEF entity obtains the encrypted context information from the data sending request, obtains the decryption key based on the device identifier of the user equipment, decrypts the encrypted context information based on the decryption key to obtain the plain target context information, and then obtains the SCEF context information shown in Table 2 from the target context information. Then the SCEF entity adds the device identifier of the user equipment, the MME context information, the RAN context information, and the target data to the data sending request, and sends the data sending request to the MME based on the serving node information in the SCEF context information. When receiving the data sending request, the MME obtains the information shown in Table 3 based on the device identifier of the user equipment in the data sending request, obtains the MME context information from the information shown in Table 3, then determines, based on the location information of the UE in the MME context information, an address of the RAN device that provides a network access service for the user equipment, adds the device identifier of the user equipment, the RAN context information, and the target data to the data sending request, and sends the data sending request to the RAN device based on the address of the RAN device. When receiving the data sending request, the RAN device obtains the RAN context information shown in Table 4 from the data sending request, and sends the target data to the user equipment based on the UE_ID in the RAN context information. Finally, the user equipment may receive the target data.

It should be noted that in this implementation of this application, the target data may be sent by the user equipment to the server, and may also be sent by the server to the user equipment, and therefore the solution provided in this implementation of this application is applicable to an MO service and an MT service.

Step 309: Delete the target context information.

After forwarding the target data, the network device may delete the target context information. The network device may delete the target context information immediately after forwarding the target data, or may delete the target context information after a specific aging time. This is not limited in this implementation of this application.

It should be noted that in this implementation of this application, the network device obtains the target context information from the server when the target data needs to be forwarded, and deletes the target context information after the target data is forwarded, so that it can be avoided that the target context information occupies a storage resource of the network device for a long time, and a requirement for a capacity of the network device in a data transmission process is lowered.

Step 310: The user equipment sends a tracking area update request to the network device.

In this implementation of this application, the user equipment is usually movable, and the RAN device that provides a network access service for the user equipment changes as the user equipment moves. When the RAN device that provides a network access service for the user equipment changes, the user equipment may send a tracking area update (English: Tracking Area Updating, TAU for short) request to the network device. Optionally, when the user equipment moves from a coverage area of a first RAN device to a coverage range of a second RAN device, the user equipment sends a tracking area update request to the network device. In this implementation of this application, when the RAN device that provides a network access service for the user equipment changes, the MME that is configured to manage the RAN device may change or may not change. In this implementation of this application, that the MME changes is used as an example for description. Therefore, unless otherwise specified, the RAN device described in this step and the following step 311 to step 316 is a new RAN device, and the MME described in this step and the following step 311 to step 316 is a new MME.

Optionally, the user equipment may send the tracking area update request to the network device by using an air interface. The tracking area update request may include the device identifier of the user equipment and an identifier of the server (for example, information about the server). In this step, the network device may be the RAN device (the new RAN device) or the MME (the new MME). When the network device is the RAN device, the user equipment directly sends the tracking area update request to the RAN device by using the air interface. When the network device is the MME, the user equipment sends the tracking area update request to the MME by using the RAN device.

Step 311: The network device obtains the target context information from the server when receiving the tracking area update request sent by the user equipment.

The network device may obtain the target context information from the server when receiving the tracking area update request sent by the user equipment. Optionally, the network device may send, based on the identifier of the server in the tracking area update request, an information obtaining request that includes the device identifier of the user equipment to the server. The server queries, based on the device identifier of the user equipment, the correspondence that is between a device identifier and context information and that is stored by the server, to obtain the target context information, then adds the target context information to an obtaining response, and sends the obtaining response to the network device, so that the network device parses the obtaining response to obtain the target context information. It should be noted that, for a specific implementation process of this step, reference may be made to the process in which when the target data is from the user equipment and points to the server, the network device obtains the target context information from the server in step 307, and details are not described herein in this implementation of this application.

Step 312: The network device updates the target context information based on the tracking area update request to obtain updated context information.

When obtaining the target context information, the network device may update the target context information based on the tracking area update request, to obtain the updated context information. Optionally, the network device may re-establish target context information, and then replace the previously established target context information with the re-established target context information, to update the target context information, so as to obtain the updated context information. For a process of updating the context information by the network device, refer to a TAU process in the prior art. Details are not described herein in this implementation of this application.

Step 313: The network device sends the updated context information to the server.

After obtaining the updated context information, the network device may send the updated context information to the server, so that the server updates the target context information based on the updated context information. For a specific implementation process of step 313, refer to the foregoing step 303. Details are not described herein in this implementation of this application.

Step 314: The network device deletes the updated context information.

After sending the updated context information to the server, the network device may delete the updated context information. The network device may delete the updated context information immediately after sending the updated context information to the server, or may delete the updated context information after a specific aging time. This is not limited in this implementation of this application.

Step 315: The server receives the updated context information sent by the network device.

For a specific implementation process of step 315, refer to the process in which the server receives the target context information sent by the network device in step 305. Details are not described herein in this implementation of this application.

Step 316: The server updates the target context information based on the updated context information.

After receiving the updated context information, the server may update the target context information based on the updated context information. Optionally, when sending the updated context information to the server, the network device may further send the device identifier of the user equipment to the server, and the server may update the target context information by using the updated context information based on the device identifier of the user equipment. Specifically, the server may delete the target context information corresponding to the device identifier of the user equipment, and then store the updated context information at a location of the target context information, so that the device identifier of the user equipment has a correspondence with the updated context information, and the target context information is updated.

In conclusion, according to the data transmission method provided in this implementation of this application, the target context information is stored by the server, and the network device obtains the target context information from the server when the target data needs to be forwarded, and deletes the target context information after the target data is forwarded. Therefore, the target context information does not occupy a storage resource of the network device for a long time, a problem of a relatively high requirement for a capacity of the network device in a data transmission process is resolved, and the requirement for a capacity of the network device in a data transmission process is lowered.

In the solution provided in this implementation of this application, the network device does not need to store context information, so that the requirement for a storage capacity of the network device is greatly lowered, expansion costs of the network device are reduced, scalability of the network device is improved, and data transmission reliability is improved. In addition, the solution provided in this implementation of this application is applicable to an IoT scenario of a big connection, and can support a large quantity of IoT devices in accessing a network simultaneously. The context information is transmitted without using an air interface resource, and therefore the air interface resource is saved, data transmission efficiency is improved, data transmit power of the user equipment is lowered, and small data transmission costs are reduced.

The data transmission method provided in this implementation of this application may be divided into an attach process, a tracking area update process, and a data transmission process, and the data transmission process involves an MT service and an MO service. In the following, the processes and the involved services in this application are described by using four implementations shown in FIG. 3-2 to FIG. 3-5C. It should be noted that in FIG. 3-2 to FIG. 3-5C, a RAN indicates a RAN device, an S/P-GW indicates an S-GW and a P-GW, an SCEF indicates an SCEF entity, an N-RAN (New RAN) indicates a new RAN device, an O-RAN (Old RAN) indicates an old RAN device, an N-MME (New MME) indicates a new MME, and an O-MME (Old MME) indicates an old MME. As shown in FIG. 3-2 to FIG. 3-5C, network devices include the RAN device, the MME, the S/P-GW, an HSS, and the SCEF entity. That the network devices mainly include the RAN device, the MME, and the SCEF entity is used as an example for description in this implementation of this application.

Referring to FIG. 3-2, FIG. 3-2 is a flowchart of a method for attaching user equipment to a network according to an implementation of this application. The method may be applied to the implementation environment shown in FIG. 2. Referring to FIG. 3-2, the method includes the following steps.

Step 301A: An AS initiates a configuration process, and the SCEF entity configures AS information.

Specifically, the AS may initiate the configuration process to the SCEF entity, and then the SCEF entity obtains authorization information from the HSS, and configures the AS information in the SCEF entity. The AS information includes but is not limited to an AS address. For a specific implementation process of step 301A, refer to the prior art. Details are not described herein in this implementation of this application.

Step 302A: The UE initiates an attach process, and the network devices establish target context information.

Optionally, the UE may send an attach request to the RAN device after being powered on. After receiving the attach request, the RAN device establishes RAN context information, and then the RAN device sends the attach request to the MME. After receiving the attach request, the MME establishes MME context information, and then the MME sends the attach request to the SCEF entity. After receiving the attach request, the SCEF entity establishes SCEF context information. For a specific implementation process of step 302A, refer to related descriptions in FIG. 1-2 and the prior art. Details are not described herein in this implementation of this application.

Step 303A: The network devices send a registration request to the AS, where the registration request includes the target context information.

The target context information includes the RAN context information, the MME context information, and the SCEF context information. Optionally, the RAN device sends the registration request to the MME, where the registration request includes the RAN context information. After receiving the registration request, the MME adds the MME context information to the registration request, and sends the registration request to the SCEF entity. After receiving the registration request, the SCEF entity adds the SCEF context information to the registration request, and sends the registration request to the AS.

Step 304A: The AS stores the target context information.

Optionally, the AS may store a correspondence between a device identifier of the UE and the target context information, and the target context information stored by the AS may be specifically shown in Table 1 in the implementation shown in FIG. 3-1A and FIG 3-1B.

Step 305A: The AS sends a registration response to the network devices.

After storing the target context information, the AS may send the registration response to the network devices. The registration response may be used to indicate that the target context information is stored successfully. For example, the AS sends the registration response to the SCEF entity, the SCEF entity forwards the registration response to the MME, and finally the MME forwards the registration response to the RAN device.

Step 306A: The network devices delete the target context information.

After receiving the registration response sent by the AS, the network devices may delete the target context information. Specifically, the RAN device deletes the RAN context information, the MME deletes the MME context information, and the SCEF entity deletes the SCEF context information.

In the solution provided in this implementation of this application, after the target context information is deleted, no target context information exists in the network device, so that the target context information does not occupy a storage resource of the network device, and a requirement for a capacity of the network device is lowered.

Referring to FIG. 3-3A to FIG. 3-3C, FIG. 3-3A to FIG. 3-3C are a flowchart of a tracking area update method according to an implementation of this application. The method may be applied to the implementation environment shown in FIG. 2. Referring to FIG. 3-3A to FIG. 3-3C, before a tracking area update is performed, no context information exists in the O-RAN device, the O-MME, and the SCEF entity. The method includes the following steps.

Step 301B: UE sends a TAU request to the N-RAN device and the N-MME.

Optionally, the UE sends the TAU request to the N-RAN device, and then the N-RAN device forwards the TAU request to the N-MME. The TAU request may include a device identifier of the UE and an identifier of an AS. For a process of sending the TAU request by the UE to the N-RAN device and the N-MME, refer to the prior art. Details are not described herein in this implementation of this application.

Steps 302B: The N-MME and the SCEF entity send an information obtaining request to an AS, where the information obtaining request includes a device identifier of the UE.

Optionally, the N-MME sends the information obtaining request to the SCEF entity, and then the SCEF entity sends the information obtaining request to the AS based on the identifier of the AS.

Step 303B: The AS obtains encrypted context information based on the device identifier of the UE.

Optionally, the AS stores a correspondence between a device identifier and context information. The AS may query the correspondence between a device identifier and context information based on the device identifier of the UE, to obtain the encrypted context information.

Step 304B: The AS sends an information obtaining response to the SCEF entity, where the information obtaining response includes the device identifier of the UE and the encrypted context information.

Optionally, the AS may first generate the information obtaining response based on the device identifier of the UE and the encrypted context information, and then send the information obtaining response to the SCEF entity.

Step 305B: The SCEF entity decrypts the encrypted context information to obtain target context information, and restores SCEF context information from the target context information.

Optionally, the SCEF entity may obtain a decryption key from the HSS based on the device identifier of the UE, and then decrypt the encrypted context information by using the decryption key, to obtain the target context information. The target context information may be shown in Table 1 in the implementation shown in FIG. 3-1A and FIG. 3-1B, and the SCEF entity may restore the SCEF context information from the target context information.

Step 306B: The SCEF entity sends the information obtaining response to the N-MME, where the information obtaining response includes the device identifier of the UE and the target context information.

Optionally, the SCEF entity may generate the obtaining response based on the device identifier of the UE and the target context information, and then send the information obtaining response to the N-MME. The target context information in step 306B may be shown in Table 1 in the implementation shown in FIG 3-1A and FIG. 3-1B, and may be target context information that does not include the SCEF context information.

Step 307B: The N-MME restores MME context information from the target context information.

Step 308B: The N-MME sends the information obtaining response to the N-RAN device, where the information obtaining response includes the device identifier of the UE and the target context information.

Optionally, the N-MME may generate the obtaining response based on the device identifier of the UE and the target context information, and then send the information obtaining response to the N-RAN. The target context information in step 308B may be shown in Table 1 in the implementation shown in FIG 3-1A and FIG. 3-1B, and may be target context information that does not include the SCEF context information and the MME context information.

Step 309B: The N-RAN device restores RAN context information from the target context information.

Step 310B: The UE and the network devices perform the TAU.

Optionally, the UE may interact with the network devices to perform the tracking area update. In this process, the network devices can obtain updated context information. The updated context information may include updated RAN context information, updated MME context information, and updated SCEF context information. For a specific process of performing the TAU by the UE and the network devices, refer to the prior art. Details are not described herein in this implementation of this application.

Step 311B: The network devices send a registration request to the AS, where the registration request includes updated context information.

The network devices in step 311B include the N-RAN device, the N-MME, and the SCEF entity.

Optionally, the N-RAN device sends the registration request to the N-MME, where the registration request includes the updated RAN context information. After receiving the registration request, the MME adds the updated MME context information to the registration request, and sends the registration request to the SCEF entity. After receiving the registration request, the SCEF entity adds the updated SCEF context information to the registration request, and sends the registration request to the AS.

Step 312B: The AS updates the encrypted context information based on the updated context information.

Optionally, the AS deletes the previously stored encrypted context information, and stores the updated context information at a location of the original encrypted context information. It should be noted that in this implementation of this application, the updated context information is also transmitted after encryption.

Step 313B: The AS sends a registration response to the network devices.

After updating the encrypted context information, the AS may send the registration response to the network devices. The registration response may be used to indicate that the encrypted context information is updated successfully.

Step 314B: The network devices delete the updated context information.

After receiving the registration response sent by the AS, the network devices may delete the updated context information. Specifically, the RAN device deletes the updated RAN context information, the MME deletes the updated MME context information, and the SCEF entity deletes the updated SCEF context information.

In the solution provided in this implementation of this application, after the updated context information is deleted, no updated context information exists in the network device, so that the updated context information does not occupy a storage resource of the network device, and a requirement for a capacity of the network device is lowered.

Referring to FIG. 3-4A and FIG. 3-4B, FIG. 3-4A and FIG. 3-4B are a flowchart of a data transmission method for an MT service according to an implementation of this application. The method may be applied to the implementation environment shown in FIG. 2. Referring to FIG. 3-4A and FIG. 3-4B, before an AS sends data to UE, no context information exists in the RAN device, the MME, and the SCEF entity. The method includes the following steps.

Step 301C: The AS obtains encrypted context information based on a device identifier of the UE.

Optionally, the AS stores a correspondence between a device identifier and context information. The AS may query, based on the device identifier of the UE, the correspondence that is between a device identifier and context information and that is stored by the AS, to obtain the encrypted context information corresponding to the device identifier of the UE.

Step 302C: The AS sends a data sending request to the SCEF entity, where the data sending request includes the device identifier of the UE, target data, and the encrypted context information.

Optionally, the AS may first generate the data sending request based on the device identifier of the UE, the target data, and the encrypted context information, and then send the data sending request to the SCEF entity. The data sending request may include the device identifier of the UE, the target data, and the encrypted context information.

Step 303C: The SCEF entity decrypts the encrypted context information to obtain target context information, and restores SCEF context information from the target context information.

When the AS sends the data sending request to the SCEF entity, the SCEF entity may receive the data sending request, then parse the data sending request to obtain the device identifier of the UE, the target data, and the encrypted context information, then obtain a decryption key from the HSS based on the device identifier of the UE, and decrypt the encrypted context information by using the decryption key, to obtain the target context information. The target context information may be shown in Table 1 in the implementation shown in FIG. 3-1A and FIG. 3-1B, and the SCEF entity may restore the SCEF context information from the target context information.

Step 304C: The SCEF entity sends the data sending request to the MME based on the SCEF context information, where the data sending request includes the device identifier of the UE, the target data, and the target context information.

Optionally, the SCEF entity may generate the data sending request based on the device identifier of the UE, the target data, and the target context information, and then send the data sending request to the MME based on the SCEF context information. The target context information in step 304C may be shown in Table 1 in the implementation shown in FIG. 3-1A and FIG. 3-1B, and may be target context information that does not include the SCEF context information.

Step 305C: The MME restores MME context information from the target context information.

Step 306C: The MME sends the data sending request to the RAN device based on the MME context information, where the data sending request includes the device identifier of the UE, the target data, and the target context information.

Optionally, the MME may generate the data sending request based on the device identifier of the UE, the target data, and the target context information, and then send the data sending request to the RAN device based on the MME context information. The target context information in step 306C may be shown in Table 1 in the implementation shown in FIG. 3-1A and FIG. 3-1B, and may be target context information that does not include the SCEF context information and the MME context information.

Step 307C: The RAN device restores RAN context information from the target context information.

Step 308C: The RAN device sends the target data to the UE based on the RAN context information.

Optionally, the RAN context information may include the identifier of the UE, and the RAN device sends the target data to the UE based on the identifier of the UE.

Step 309C: The UE sends a data sending response to the AS by using the RAN device, the MME, and the SCEF entity.

The data sending response is used to indicate that the target data is successfully sent. For a process in which the UE sends the data sending response to the AS by using the RAN device, the MME, and the SCEF entity, refer to related technologies. Details are not described herein in this implementation of this application.

Step 310C: The network devices delete the target context information.

After forwarding the target data, the network devices may delete the target context information. Specifically, the RAN device deletes the RAN context information, the MME deletes the MME context information, and the SCEF entity deletes the SCEF context information.

In the solution provided in this implementation of this application, after the target context information is deleted, no target context information exists in the network device, so that the target context information does not occupy a storage resource of the network device, and a requirement for a capacity of the network device is lowered.

Referring to FIG. 3-5A to FIG. 3-5C, FIG. 3-5A to FIG. 3-5C are a flowchart of a data transmission method for an MO service according to an implementation of this application. The method may be applied to the implementation environment shown in FIG. 2. Referring to FIG. 3-5A to FIG. 3-5C, before UE sends data to an AS, no context information exists in the RAN device, the MME, and the SCEF entity. The method includes the following steps.

Step 301D: The UE sends a data sending request to the RAN device, where the data sending request includes a device identifier of the UE, target data, and an identifier of the AS.

Optionally, the UE may generate the data sending request based on the device identifier of the UE, the target data, and the identifier of the AS, and then send the data sending request to the RAN device. The data sending request includes the device identifier of the UE, the target data, and the identifier of the AS.

Step 302D: The RAN device sends an information obtaining request to the AS by using the MME and the SCEF entity, where the information obtaining request includes the device identifier of the UE.

Optionally, the RAN device generates the information obtaining request based on the device identifier of the UE, and then sends the information obtaining request to the AS by using the MME and the SCEF entity.

Step 303D: The AS obtains encrypted context information based on the device identifier of the UE.

An implementation process of step 303D is the same as or similar to that of step 301C in the implementation shown in FIG. 3-4A and FIG. 3-4B. Details are not described herein in this implementation of this application.

Step 304D: The AS sends an information obtaining response to the SCEF entity, where the information obtaining response includes the device identifier of the UE and the encrypted context information.

Optionally, the AS may first generate the information obtaining response based on the device identifier of the UE and the encrypted context information, and then send the information obtaining response to the SCEF entity. The information obtaining response may include the device identifier of the UE and the encrypted context information.

Step 305D: The SCEF entity decrypts the encrypted context information to obtain target context information, and restores SCEF context information from the target context information.

An implementation process of step 305D is the same as or similar to that of step 303C in the implementation shown in FIG. 3-4A and FIG. 3-4B. Details are not described herein in this implementation of this application.

Step 306D: The SCEF entity sends the information obtaining response to the MME, where the information obtaining response includes the device identifier of the UE and the target context information.

Optionally, the SCEF entity may generate the information obtaining response based on the device identifier of the UE and the target context information, and then send the information obtaining response to the MME. The target context information in step 306D may be shown in Table 1 in the implementation shown in FIG. 3-1A and FIG. 3-1B, and may be target context information that does not include the SCEF context information.

Step 307D: The MME restores MME context information from the target context information.

Step 308D: The MME sends the information obtaining response to the RAN device, where the information obtaining response includes the device identifier of the UE and the target context information.

Optionally, the MME may generate the information obtaining response based on the device identifier of the UE and the target context information, and then send the information obtaining response to the RAN device. The target context information in step 308D may be shown in Table 1 in the implementation shown in FIG. 3-1A and FIG. 3-1B, and may be target context information that does not include the SCEF context information and the MME context information.

Step 309D: The RAN device restores RAN context information from the target context information.

Step 310D: The RAN device sends the target data to the MME based on the RAN context information.

Optionally, the RAN context information may include serving node information, where the serving node information may be specifically an address of the MME, and the RAN device may send the target data to the MME based on the serving node information.

Step 311D: The MME sends the target data to the SCEF entity based on the MME context information.

The MME context information may include information (for example, an SCEF ID) about the SCEF entity, and the MME may send the target data to the SCEF entity based on the information about the SCEF entity. Optionally, to improve data transmission security, the target data sent by the UE is encrypted. The MME may perform integrity verification and decryption on the target data, and then send the target data to the SCEF entity. For a process in which the MME may perform integrity verification and decryption on the target data, refer to the prior art. Details are not described herein in this implementation of this application.

Step 312D: The SCEF entity sends the target data to the AS based on the SCEF context information.

Optionally, the SCEF context information may include AS information (for example, an AS address), and the SCEF entity may send the target data to the AS based on the AS information.

Step 313D: The AS sends a data sending response to the UE by using the SCEF entity, the MME, and the RAN device.

Optionally, after receiving the target data, the AS may generate the data sending response, and then send the data sending response to the UE by using the SCEF entity, the MME, and the RAN device successively. The data sending response is used to indicate that the target data is successfully sent.

Step 314D: The network devices delete the target context information.

In the solution provided in this implementation of this application, after the target context information is deleted, no target context information exists in the network device, so that the target context information does not occupy a storage resource of the network device, and a requirement for a capacity of the network device is lowered.

The following is an implementation for an apparatus of this application, and the apparatus may be configured to perform the method implementation of this application. For details not disclosed in the apparatus implementation of this application, refer to the method implementation of this application.

Referring to FIG. 4-1, FIG. 4-1 is a block diagram of a data transmission apparatus 400 according to an implementation of this application. The data transmission apparatus 400 may be implemented as a part or all of a network device by using software, hardware, or a combination of software and hardware, and the network device may be a RAN device, an MME, or an SCEF entity in the implementation environment shown in FIG. 2. As shown in FIG. 4-1, the data transmission apparatus 400 may include:
a first obtaining module 401, configured to obtain target context information from a server when target data is received, where the target data is associated with user equipment;
a forwarding module 402, configured to forward the target data based on the target context information; and
a first deletion module 403, configured to delete the target context information.

In conclusion, according to the data transmission apparatus provided in this implementation of this application, the target context information is stored by the server, and the network device obtains the target context information from the server when the target data needs to be forwarded, and deletes the target context information after the target data is forwarded. Therefore, the target context information does not occupy a storage resource of the network device for a long time, a problem of a relatively high requirement for a capacity of the network device in a data transmission process is resolved, and the requirement for a capacity of the network device in a data transmission process is lowered.

Further, referring to FIG. 4-2, FIG. 4-2 is a block diagram of another data transmission apparatus 400 according to an implementation of this application. Referring to FIG. 4-2, based on FIG 4-1, the data transmission apparatus 400 further includes:
an establishment module 404, configured to establish the target context information when an attach request sent by the user equipment is received;
a first sending module 405, configured to send the target context information to the server, so that the server stores the target context information; and
a second deletion module 406, configured to delete the target context information.

Further, still referring to FIG. 4-2, the data transmission apparatus 400 further includes:
a second obtaining module 407, configured to obtain the target context information from the server when a tracking area update request sent by the user equipment is received;
an updating module 408, configured to update the target context information based on the tracking area update request to obtain updated context information;
a second sending module 409, configured to send the updated context information to the server, so that the server updates the target context information based on the updated context information; and
a third deletion module 410, configured to delete the updated context information.

Optionally, the first sending module 406 is configured to: encrypt the target context information to obtain encrypted context information, and send the encrypted context information to the server.

Optionally, the first sending module 406 is configured to send a registration request to the server, where the registration request includes the target context information and a device identifier of the user equipment, so that the server stores the target context information based on the device identifier of the user equipment.

Optionally, the target data is from the user equipment and points to the server, the target data is sent by the user equipment to the network device by using a data sending request, the data sending request includes the device identifier of the user equipment, and the first obtaining module 401 is configured to:
obtain the device identifier of the user equipment from the data sending request when the data sending request is received; and
obtain the target context information from the server based on the device identifier of the user equipment.

Optionally, the target data is from the server and points to the user equipment, the target data is sent by the server to the network device by using a data sending request, the data sending request includes the target context information, and the first obtaining module 401 is configured to obtain the target context information from the data sending request when the data sending request is received.

In conclusion, according to the data transmission apparatus provided in this implementation of this application, the target context information is stored by the server, and the network device obtains the target context information from the server when the target data needs to be forwarded, and deletes the target context information after the target data is forwarded. Therefore, the target context information does not occupy a storage resource of the network device for a long time, a problem of a relatively high requirement for a capacity of the network device in a data transmission process is resolved, and the requirement for a capacity of the network device in a data transmission process is lowered.

Referring to FIG. 5-1, FIG. 5-1 is a block diagram of still another data transmission apparatus 500 according to an implementation of this application. The data transmission apparatus 500 may be implemented as a part or all of a server by using software, hardware, or a combination of software and hardware, and the server may be the AS in the implementation environment shown in FIG. 2. Referring to FIG. 5-1, the data transmission apparatus 500 may include:
a first receiving module 501, configured to receive target context information sent by a network device, where the target context information is established by the network device when the network device receives an attach request sent by user equipment, and is sent to the server, and the network device deletes the target context information after sending the target context information to the server; and
a storage module 502, configured to store the target context information, so that the network device obtains the target context information from the server when receiving target data, and forwards the target data based on the target context information, where the target data is associated with the user equipment.

In conclusion, according to the data transmission apparatus provided in this implementation of this application, the target context information is stored by the server, and the network device obtains the target context information from the server when the target data needs to be forwarded, and deletes the target context information after the target data is forwarded. Therefore, the target context information does not occupy a storage resource of the network device for a long time, a problem of a relatively high requirement for a capacity of the network device in a data transmission process is resolved, and the requirement for a capacity of the network device in a data transmission process is lowered.

Further, referring to FIG. 5-2, FIG. 5-2 is a block diagram of yet another data transmission apparatus 500 according to an implementation of this application. Referring to FIG. 5-2, based on FIG 5-1, the data transmission apparatus 500 further includes:
a second receiving module 503, configured to receive updated context information sent by the network device, where the updated context information is obtained after the network device updates the target context information based on a tracking area update request; and
an updating module 504, configured to update the target context information based on the updated context information.

Optionally, the first receiving module 501 is configured to receive encrypted context information sent by the network device, where the encrypted context information is obtained after the network device encrypts the target context information; and
the storage module 502 is configured to store the encrypted context information.

Optionally, the first receiving module 501 is configured to receive a registration request sent by the network device, where the registration request includes the target context information and a device identifier of the user equipment; and
the storage module 502 is configured to store the target context information based on the device identifier of the user equipment.

Optionally, the target data is from the user equipment, and still referring to FIG. 5-2, the data transmission apparatus 500 further includes:
a third receiving module 505, configured to receive the target data sent by the network device, where the target data is sent by the network device based on the target context information.

Optionally, the target data points to the user equipment, and still referring to FIG. 5-2, the data transmission apparatus 500 further includes:
an obtaining module 506, configured to obtain the target context information based on the device identifier of the user equipment; and
a sending module 507, configured to send a data sending request to the network device, where the data sending request includes the target data and the target context information, so that the network device sends the target data to the user equipment based on the target context information.

In conclusion, according to the data transmission apparatus provided in this implementation of this application, the target context information is stored by the server, and the network device obtains the target context information from the server when the target data needs to be forwarded, and deletes the target context information after the target data is forwarded. Therefore, the target context information does not occupy a storage resource of the network device for a long time, a problem of a relatively high requirement for a capacity of the network device in a data transmission process is resolved, and the requirement for a capacity of the network device in a data transmission process is lowered.

It should be noted that when the data transmission apparatus provided in the foregoing implementation transmits data, division of the foregoing functional modules is used only as an example for description. In actual application, the foregoing functions may be allocated to different functional modules and implemented based on a requirement, that is, an internal structure of a device is divided into different functional modules for implementing all or some of the functions described above. In addition, the data transmission apparatus provided in the foregoing implementations and the data transmission method implementation pertain to a same concept. For a specific implementation process of the data transmission apparatus, refer to the method implementation. Details are not described herein.

Referring to FIG. 6, FIG 6 is a schematic structural diagram of a network device 600 according to an implementation of this application. The network device 600 may be the RAN device, the MME, or the SCEF entity in the implementation environment shown in FIG. 2, and is configured to perform partial methods provided in the implementations shown in FIG. 3-1A to FIG. 3-5C. Referring to FIG. 6, the network device 600 may include a processor 610 and a transmitter 620, and the processor 610 and the transmitter 620 are connected by using a bus 630.

The processor 610 includes one or more processing cores. The processor 610 performs various function applications and data processing by running a software program and a unit. Optionally, as shown in FIG. 6, the network device 600 further includes a memory 640, a network interface 650, and a receiver 660. The memory 640, the network interface 650, and the receiver 660 are separately connected to the processor 610 and the transmitter 620 by using the bus 630.

There may be a plurality of network interfaces 650, and the network interface 650 is used by the network device 600 to communicate with another storage device or network device. The network interface 650 is optional. In actual application, the network device 600 may communicate with another storage device or network device by using the transmitter 620 and the receiver 660. Therefore, there may be no network interface on the network device 600. This is not limited in this implementation of this application.

The processor 610 is configured to obtain target context information from a server when target data is received, where the target data is associated with user equipment;
the transmitter 620 is configured to forward the target data based on the target context information; and
the processor 610 is further configured to delete the target context information.

Optionally, the processor 610 is further configured to establish the target context information when an attach request sent by the user equipment is received;
the transmitter 620 is further configured to send the target context information to the server, so that the server stores the target context information; and
the processor 610 is further configured to delete the target context information.

Optionally, the processor 610 is further configured to obtain the target context information from the server when a tracking area update request sent by the user equipment is received;
the processor 610 is further configured to update the target context information based on the tracking area update request to obtain updated context information;
the transmitter 620 is further configured to send the updated context information to the server, so that the server updates the target context information based on the updated context information; and
the processor 610 is further configured to delete the updated context information.

Optionally, the transmitter 620 is configured to: encrypt the target context information to obtain encrypted context information, and send the encrypted context information to the server.

Optionally, the transmitter 620 is configured to send a registration request to the server, where the registration request includes the target context information and a device identifier of the user equipment, so that the server stores the target context information based on the device identifier of the user equipment.

Optionally, the target data is from the user equipment and points to the server, the target data is sent by the user equipment to the network device by using a data sending request, the data sending request includes the device identifier of the user equipment, and
the processor 610 is configured to: obtain the device identifier of the user equipment from the data sending request when the data sending request is received; and obtain the target context information from the server based on the device identifier of the user equipment.

Optionally, the target data is from the server and points to the user equipment, the target data is sent by the server to the network device by using a data sending request, the data sending request includes the target context information, and
the processor 610 is configured to obtain the target context information from the data sending request when the data sending request is received.

In conclusion, according to the network device provided in this implementation of this application, the target context information is stored by the server, and the network device obtains the target context information from the server when the target data needs to be forwarded, and deletes the target context information after the target data is forwarded. Therefore, the target context information does not occupy a storage resource of the network device for a long time, a problem of a relatively high requirement for a capacity of the network device in a data transmission process is resolved, and the requirement for a capacity of the network device in a data transmission process is lowered.

Referring to FIG. 7, FIG. 7 is a schematic structural diagram of a server 700 according to an implementation of this application. The server 700 may be the AS in the implementation environment shown in FIG. 2, and is configured to perform partial methods provided in the implementation shown in FIG. 3-1A and FIG. 3-1B. Referring to FIG. 7, the server 700 includes at least one processor 701, at least one network interface 702 or another communications interface, a memory 703, and at least one communications bus 704. The at least one communications bus 704 is configured to implement connection and communication between these apparatuses. The processor 701 is configured to execute an executable module stored in the memory 703, for example, a computer program. The memory 703 may include a RAM, and may further include a non-volatile memory, for example, at least one magnetic disk memory. Communication and connection between the server 700 and at least one other network element are implemented by using the at least one network interface, and the server 700 may communicate with the at least one other network element by using the Internet, a wide area network, a local network, a metropolitan area network, and the like.

In some implementations, the memory 703 stores a program 7031. The program 7031 may be executed by the processor 701, and the program 7031 is configured to perform partial data transmission methods provided in the implementations shown in FIG. 3-1A to FIG. 3-5C.

In conclusion, according to the server provided in this implementation of this application, target context information is stored by the server, and a network device obtains the target context information from the server when target data needs to be forwarded, and deletes the target context information after the target data is forwarded. Therefore, the target context information does not occupy a storage resource of the network device for a long time, a problem of a relatively high requirement for a capacity of the network device in a data transmission process is resolved, and the requirement for a capacity of the network device in a data transmission process is lowered.

Referring to FIG. 8, FIG. 8 is a schematic structural diagram of a data transmission system 800 according to an implementation of this application. The data transmission system 800 includes user equipment 810, a network device 820, and a server 830.

In a possible implementation, the network device 820 includes the data transmission apparatus 400 shown in FIG 4-1 or FIG. 4-2, and the server 830 includes the data transmission apparatus 500 shown in FIG. 5-1 or FIG. 5-2.

In another possible implementation, the network device 820 is the network device 600 shown in FIG. 6, and the server 830 is the server 700 shown in FIG. 7.

In conclusion, according to the data transmission system provided in this implementation of this application, target context information is stored by the server, and the network device obtains the target context information from the server when target data needs to be forwarded, and deletes the target context information after the target data is forwarded. Therefore, the target context information does not occupy a storage resource of the network device for a long time, a problem of a relatively high requirement for a capacity of the network device in a data transmission process is resolved, and the requirement for a capacity of the network device in a data transmission process is lowered.

An implementation of this application further provides a computer readable storage medium, where the computer readable storage medium stores an instruction, and when the instruction runs on a processing component of a computer, the processing component performs steps related to a network device in the implementations shown in FIG. 3-1A to FIG. 3-5C.

An implementation of this application further provides a computer readable storage medium, where the computer readable storage medium stores an instruction, and when the instruction runs on a processing component of a computer, the processing component performs steps related to a server in the implementations shown in FIG. 3-1A to FIG. 3-5C.

An implementation of this application further provides a computer program product that includes an instruction. When the computer program product runs on a computer, the computer performs steps related to a network device in the implementations shown in FIG. 3-1A to FIG. 3-5C.

An implementation of this application further provides a computer program product that includes an instruction. When the computer program product runs on a computer, the computer performs steps related to a server in the implementations shown in FIG. 3-1A to FIG. 3-5C.

An implementation of this application further provides a processing apparatus. The processing apparatus includes at least one circuit, configured to perform steps related to a network device in the implementations shown in FIG. 3-1A to FIG. 3-5C.

An implementation of this application further provides a processing apparatus. The processing apparatus includes at least one circuit, configured to perform steps related to a server in the implementations shown in FIG. 3-1A to FIG. 3-5C.

The term "and/or" in this application describes only an association relationship for describing associated objects and represents that three relationships may exist. For example, A and/or B may represent the following three cases: Only A exists, both A and B exist, and only B exists.

A person of ordinary skill in the art may understand that all or some of the steps of the implementations may be implemented by hardware or a program instructing related hardware. The program may be stored in a computer-readable storage medium. The storage medium may include a read-only memory, a magnetic disk, or an optical disc

The scope of protection shall be defined by the appended claims.

## Claims

1. A data transmission method, carried out by a radio access network, RAN, node in a data transmission system, wherein the data transmission system comprises a user equipment, a server, the RAN node, a mobility management entity, MME, and a service capability exposure function entity, SCEF, and the method comprises:
receiving (301) an attach request from the user equipment, UE;
establishing (302) RAN context information which includes a device identifier associated with the UE and radio resource control, RRC, context, wherein the RRC context includes location information of the UE and air interface resource information;
sending (303) the RAN context information to the MME;
deleting (304) the RAN context information;
obtaining (307) the RAN context information from the MME when target data is received, wherein the target data is associated with the user equipment;
forwarding (308) the target data based on the RAN context information; and
deleting (309) the RAN context information,
wherein the obtaining and forwarding are either:
from the UE and to the MME respectively; or
from the MME and to the UE respectively.

2. The method according to claim 1, wherein after the sending the RAN context information to the MME, the method further comprises:
obtaining the RAN context information from the MME when a tracking area update request sent by the user equipment is received;
updating the RAN context information based on the tracking area update request to obtain updated context information;
sending the updated context information to the MME, causing the MME to update the RAN context information based on the updated context information; and
deleting the updated context information.

3. A data transmission method, carried out by a service capability exposure function entity, SCEF, in a data transmission system, wherein the data transmission system comprises a user equipment, a server, a radio access network, RAN, node, a mobility management entity, MME and the SCEF, and the method comprises:
receiving (301) an attach request of the user equipment, UE, from the MME;
establishing (302) SCEF context information, which includes an evolved packet system bearer identifier, serving node information, application server information, an address of the MME, and RAN context information, wherein the RAN context information includes a UE device identifier and radio resource control, RRC, context, wherein the RRC context includes location information of the UE and air interface resource information, wherein the RAN context information is included in the attach request;
encrypting the SCEF context information and sending (303) the encrypted SCEF context information to the server in a registration request;
deleting (304) the SCEF context information;
obtaining (307) the encrypted SCEF context information from the server when target data is received, wherein the target data is associated with the user equipment;
decrypting the encrypted SCEF context information received from the server and forwarding (308) the target data based on the decrypted SCEF context information context information; and
deleting (309) the SCEF context information,
wherein the obtaining and forwarding are either:
from the MME and to the server, respectively; or
from the server and to the MME. respectively.

4. The method according to claim 3, wherein after the sending the SCEF context information to the MME, the method further comprises:
obtaining the RAN context information from the MME when a tracking area update request sent by the user equipment is received;
updating the RAN context information based on the tracking area update request to obtain updated context information;
sending the updated context information to the server, causing the server to update the RAN context information based on the updated context information; and
deleting the updated context information.

5. A data transmission method, carried out by a server in a data transmission system, wherein the data transmission system comprises a user equipment, a radio access network, RAN, node, a mobility management entity, MME, a service capability exposure function, SCEF, and the server, and the method comprises:
receiving (305) encrypted SCEF context information sent by the SCEF, in a registration request, wherein the encrypted SCEF context information includes an evolved packet system bearer identifier, serving node information, application server information, an address of the MME, and RAN context information, wherein the RAN context information includes a device identifier associated with the user equipment, UE, and radio resource control, RRC, context, wherein the RRC context includes location information of the UE and air interface resource information; and
storing (306) the encrypted SCEF context information;
providing (307) the encrypted SCEF context information to the SCEF;
wherein with regard to the providing one of the following two holds:
the providing is performed when the server sends target data to the SCEF; or
after the providing, the server receives target data from the SCEF.

6. The method according to claim 5, wherein after the storing the target context information, the method further comprises:
receiving updated SCEF context information sent by the SCEF, wherein the updated SCEF context information is obtained after the network device updates the SCEF context information based on a tracking area update request; and
updating the SCEF context information based on the updated SCEF context information.

7. A radio access network, RAN, node (600) for use in a data transmission system, wherein the data transmission system comprises a user equipment, a server, the RAN node, a mobility management entity, MME, and a service capability exposure function entity, SCEF; wherein the RAN node comprises a processor (610) and a memory (640), the memory is configured to store a set of instructions which when executed by the processor, causes the RAN node to perform the steps of:
receiving an attach request from the user equipment, UE;
establishing RAN context information which includes a UE device identifier and radio resource control, RRC, context, wherein the RRC context includes location information of the UE and air interface resource information;
sending the RAN context information to the MME;
deleting the RAN context information;
obtaining the RAN context information from the MME when target data is received, wherein the target data is associated with the user equipment;
forwarding the target data based on the RAN context information; and
deleting the RAN context information,
wherein the obtaining and forwarding are either:
from the UE and to the MME respectively; or
from the MME and to the UE respectively.

8. The RAN node according to claim 7, wherein after the sending the RAN context information to the MME, the set of instructions further comprise instructions to perform the steps of:
obtaining the RAN context information from the MME when a tracking area update request sent by the user equipment is received;
updating the RAN context information based on the tracking area update request to obtain updated context information;
sending the updated context information to the MME, causing the MME to update the RAN context information based on the updated context information; and
deleting the updated context information.

9. A service capability exposure function entity, SCEF, (600) for use in a data transmission system, wherein the data transmission system comprises a user equipment, a server, a radio access network, RAN, node, a mobility management entity, MME and the SCEF, wherein the SCEF comprises a processor (610) and a memory (640), the memory is configured to store a set of instructions which when executed by the processor, causes the SCEF to perform the steps of:
receiving an attach request of the user equipment, UE, from the MME;
establishing SCEF context information, which includes an evolved packet system bearer identifier, serving node information, application server information, an address of the MME, and RAN context information, wherein the RAN context information includes a UE device identifier and radio resource control, RRC, context, wherein the RRC context includes location information of the UE and air interface resource information, wherein the RAN context information is included in the attach request;
encrypting the SCEF context information and sending (303) the encrypted SCEF context information to the server in a registration request;
deleting the SCEF context information;
obtaining the encrypted SCEF context information from the server when target data is received, wherein the target data is associated with the user equipment;
decrypting the encrypted SCEF context information received from the server and forwarding the target data based on the decrypted SCEF context information context information; and
deleting the SCEF context information,
wherein the obtaining and forwarding are either:
from the MME and to the server, respectively; or
from the server and to the MME, respectively.

10. The SCEF according to claim 9, wherein after the sending the SCEF context information to the MME, the set of instructions further comprise instructions to perform the steps of:
obtaining the RAN context information from the MME when a tracking area update request sent by the user equipment is received;
updating the RAN context information based on the tracking area update request to obtain updated context information;
sending the updated context information to the server, causing the server to update the RAN context information based on the updated context information; and
deleting the updated context information.

11. A server (700) for use in a data transmission system, wherein the data transmission system comprises a user equipment, a radio access network, RAN, node, a mobility management entity, MME, a service capability exposure function, SCEF, and the server, wherein the server comprises a processor (701) and a memory (703), the memory is configured to store a set of instructions which when executed by the processor, causes the server to perform the steps of:
receiving encrypted SCEF context information sent by the SCEF, in a registration request, wherein the encrypted SCEF context information includes an evolved packet system bearer identifier, serving node information, application server information, an address of the MME, and RAN context information, wherein the RAN context information includes a device identifier associated with the user equipment, UE, and radio resource control, RRC, context, wherein the RRC context includes location information of the UE and air interface resource information; and
storing the encrypted SCEF context information;
providing the encrypted SCEF context information to the SCEF;
wherein with regard to the providing one of the following two holds:
the providing is performed when the server sends target data to the SCEF; or
after the providing, the server receives target data from the SCEF.

12. The server according to claim 11, wherein after the storing the target context information, the set of instructions further comprise instructions to perform the steps of:
receiving updated SCEF context information sent by the the SCEF wherein the updated SCEF context information is obtained after the network device updates the SCEF context information based on a tracking area update request; and
updating the SCEF context information based on the updated SCEF context information.

13. A data transmission system (800), wherein the data transmission system comprises a user equipment, a radio access network, RAN, node according to any one of claims 7 and 8, a service capability exposure function entity, SCEF, according to any one of claims 9 and 10 and a server according to any one of claims 11 and 12.

## Patentansprüche

1. Datenübertragungsverfahren, ausgeführt durch einen Funkzugangsnetz- bzw. RAN-Knoten in einem Datenübertragungssystem, wobei das Datenübertragungssystem ein Benutzergerät, einen Server, den RAN-Knoten, eine Mobilitätsmanagemententität, MME, und eine Dienstfähigkeitsoffenlegungsfunktionsentität, SCEF, umfasst, und das Verfahren Folgendes umfasst:
Empfangen (301) einer Anbindungsanforderung von dem Benutzergerät, UE;
Erstellen (302) von RAN-Kontextinformationen, die eine mit dem UE assoziierte Vorrichtungskennung und einen Funkressourcensteuerungs- bzw. RRC-Kontext beinhalten, wobei der RRC-Kontext Standortinformationen des UE und
Luftschnittstellenressourceninformationen beinhaltet;
Senden (303) der RAN-Kontextinformationen an die MME;
Löschen (304) der RAN-Kontextinformationen;
Erhalten (307) der RAN-Kontextinformationen von der MME, wenn Zieldaten empfangen werden, wobei die Zieldaten mit dem Benutzergerät assoziiert sind;
Weiterleiten (308) der Zieldaten basierend auf den RAN-Kontextinformationen; und
Löschen (309) der RAN-Kontextinformationen,
wobei das Erhalten und Weiterleiten entweder:
von dem UE bzw. an die MME erfolgen; oder
von der MME bzw. an das UE erfolgen.

2. Verfahren nach Anspruch 1, wobei das Verfahren nach dem Senden der RAN-Kontextinformationen an die MME ferner Folgendes umfasst:
Erhalten der RAN-Kontextinformationen von der MME bei Empfang einer durch das Benutzergerät gesendeten Verfolgungsbereichsaktualisierungsanforderung;
Aktualisieren der RAN-Kontextinformationen basierend auf der Verfolgungsbereichsaktualisierungsanforderung, um aktualisierte Kontextinformationen zu erhalten;
Senden der aktualisierten Kontextinformationen an die MME, wodurch bewirkt wird, dass die MME die RAN-Kontextinformationen basierend auf den aktualisierten Kontextinformationen aktualisiert; und
Löschen der aktualisierten Kontextinformationen.

3. Datenübertragungsverfahren, ausgeführt durch eine Dienstfähigkeitsoffenlegungsfunktionsentität, SCEF, in einem Datenübertragungssystem, wobei das Datenübertragungssystem ein Benutzergerät, einen Server, einen Funkzugangsnetz- bzw. RAN-Knoten, eine Mobilitätsmanagemententität, MME, und die SCEF umfasst, und das Verfahren Folgendes umfasst:
Empfangen (301) einer Anbindungsanforderung des Benutzergeräts, UE, von der MME;
Erstellen (302) von SCEF-Kontextinformationen, die eine "Evolved-Packet-System-Bearer"-Kennung, Bedienender-Knoten-Informationen, Anwendungsserverinformationen, eine Adresse der MME und RAN-Kontextinformationen beinhalten, wobei die RAN-Kontextinformationen eine UE-Vorrichtungskennung und einen Funkressourcensteuerungs- bzw. RRC-Kontext beinhalten, wobei der RRC-Kontext Standortinformationen des UE und Luftschnittstellenressourceninformationen beinhaltet, wobei die RAN-Kontextinformationen in der Anbindungsanforderung enthalten sind;
Verschlüsseln der SCEF-Kontextinformationen und Senden (303) der verschlüsselten SCEF-Kontextinformationen an den Server in einer Registrierungsanforderung;
Löschen (304) der SCEF-Kontextinformationen;
Erhalten (307) der verschlüsselten SCEF-Kontextinformationen von dem Server, wenn Zieldaten empfangen werden, wobei die Zieldaten mit dem Benutzergerät assoziiert sind;
Entschlüsseln der von dem Server empfangenen verschlüsselten SCEF-Kontextinformationen und Weiterleiten (308) der Zieldaten basierend auf den entschlüsselten SCEF-Kontextinformationen; und
Löschen (309) der SCEF-Kontextinformationen,
wobei das Erhalten und Weiterleiten entweder:
von der MME bzw. an den Server erfolgen; oder
von dem Server bzw. an die MME erfolgen.

4. Verfahren nach Anspruch 3, wobei das Verfahren nach dem Senden der SCEF-Kontextinformationen an die MME ferner Folgendes umfasst:
Erhalten der RAN-Kontextinformationen von der MME bei Empfang einer durch das Benutzergerät gesendeten Verfolgungsbereichsaktualisierungsanforderung;
Aktualisieren der RAN-Kontextinformationen basierend auf der Verfolgungsbereichsaktualisierungsanforderung, um aktualisierte Kontextinformationen zu erhalten;
Senden der aktualisierten Kontextinformationen an den Server, wodurch bewirkt wird, dass der Server die RAN-Kontextinformationen basierend auf den aktualisierten Kontextinformationen aktualisiert; und
Löschen der aktualisierten Kontextinformationen.

5. Datenübertragungsverfahren, ausgeführt durch einen Server in einem Datenübertragungssystem, wobei das Datenübertragungssystem ein Benutzergerät, einen Funkzugangsnetz- bzw. RAN-Knoten, eine Mobilitätsmanagemententität, MME, eine Dienstfähigkeitsoffenlegungsfunktion, SCEF, und den Server umfasst, und das Verfahren Folgendes umfasst:
Empfangen (305) durch die SCEF gesendeter verschlüsselter SCEF-Kontextinformationen in einer Registrierungsanforderung, wobei die verschlüsselten SCEF-Kontextinformationen eine "Evolved-Packet-System-Bearer"-Kennung, Bedienender-Knoten-Informationen, Anwendungsserverinformationen, eine Adresse der MME und RAN-Kontextinformationen beinhalten, wobei die RAN-Kontextinformationen eine mit dem Benutzergerät, UE, assoziierte Vorrichtungskennung und einen Funkressourcensteuerungs- bzw. RRC-Kontext beinhalten, wobei der RRC-Kontext Standortinformationen des UE und Luftschnittstellenressourceninformationen beinhaltet; und
Speichern (306) der verschlüsselten SCEF-Kontextinformationen;
Liefern (307) der verschlüsselten SCEF-Kontextinformationen an die SCEF;
wobei bezüglich des Lieferns eines der zwei Folgenden gilt:
das Liefern wird durchgeführt, wenn der Server Zieldaten an die SCEF sendet; oder der Server empfängt nach dem Liefern Zieldaten von der SCEF.

6. Verfahren nach Anspruch 5, wobei das Verfahren nach dem Speichern der Zielkontextinformationen ferner Folgendes umfasst:
Empfangen durch die SCEF gesendeter aktualisierter SCEF-Kontextinformationen, wobei die aktualisierten SCEF-Kontextinformationen erhalten werden, nachdem die Netzvorrichtung die SCEF-Kontextinformationen basierend auf einer Verfolgungsbereichsaktualisierungsanforderung aktualisiert; und
Aktualisieren der SCEF-Kontextinformationen basierend auf den aktualisierten SCEF-Kontextinformationen.

7. Funkzugangsnetz- bzw. RAN-Knoten (600) zur Verwendung in einem Datenübertragungssystem, wobei das Datenübertragungssystem ein Benutzergerät, einen Server, den RAN-Knoten, eine Mobilitätsmanagemententität, MME, und eine Dienstfähigkeitsoffenlegungsfunktionsentität, SCEF, umfasst; wobei der RAN-Knoten einen Prozessor (610) und einen Speicher (640) umfasst, der Speicher ausgelegt ist zum Speichern eines Satzes von Anweisungen, der bei Ausführung durch den Prozessor bewirkt, dass der RAN-Knoten die folgenden Schritte durchführt:
Empfangen einer Anbindungsanforderung von dem Benutzergerät, UE;
Erstellen von RAN-Kontextinformationen, die eine UE-Vorrichtungskennung und einen Funkressourcensteuerungs- bzw. RRC-Kontext beinhalten, wobei der RRC-Kontext Standortinformationen des UE und
Luftschnittstellenressourceninformationen beinhaltet;
Senden der RAN-Kontextinformationen an die MME;
Löschen der RAN-Kontextinformationen;
Erhalten der RAN-Kontextinformationen von der MME, wenn Zieldaten empfangen werden, wobei die Zieldaten mit dem Benutzergerät assoziiert sind;
Weiterleiten der Zieldaten basierend auf den RAN-Kontextinformationen; und
Löschen der RAN-Kontextinformationen,
wobei das Erhalten und Weiterleiten entweder:
von dem UE bzw. an die MME erfolgen; oder
von der MME bzw. an das UE erfolgen.

8. RAN-Knoten nach Anspruch 7, wobei der Satz von Anweisungen nach dem Senden der RAN-Kontextinformationen an die MME ferner Anweisungen zum Durchführen der folgenden Schritte umfasst:
Erhalten der RAN-Kontextinformationen von der MME bei Empfang einer durch das Benutzergerät gesendeten Verfolgungsbereichsaktualisierungsanforderung;
Aktualisieren der RAN-Kontextinformationen basierend auf der Verfolgungsbereichsaktualisierungsanforderung, um aktualisierte Kontextinformationen zu erhalten;
Senden der aktualisierten Kontextinformationen an die MME, wodurch bewirkt wird, dass die MME die RAN-Kontextinformationen basierend auf den aktualisierten Kontextinformationen aktualisiert; und
Löschen der aktualisierten Kontextinformationen.

9. Dienstfähigkeitsoffenlegungsfunktionsentität, SCEF, (600) zur Verwendung in einem Datenübertragungssystem, wobei das Datenübertragungssystem ein Benutzergerät, einen Server, einen Funkzugangsnetz- bzw. RAN-Knoten, eine Mobilitätsmanagemententität, MME, und die SCEF umfasst, wobei die SCEF einen Prozessor (610) und einen Speicher (640) umfasst, der Speicher ausgelegt ist zum Speichern eines Satzes von Anweisungen, der bei Ausführung durch den Prozessor bewirkt, dass die SCEF die folgenden Schritte durchführt:
Empfangen einer Anbindungsanforderung des Benutzergeräts, UE, von der MME;
Erstellen von SCEF-Kontextinformationen, die eine "Evolved-Packet-System-Bearer"-Kennung, Bedienender-Knoten-Informationen, Anwendungsserverinformationen, eine Adresse der MME und RAN-Kontextinformationen beinhalten, wobei die RAN-Kontextinformationen eine UE-Vorrichtungskennung und einen Funkressourcensteuerungs- bzw. RRC-Kontext beinhalten, wobei der RRC-Kontext Standortinformationen des UE und Luftschnittstellenressourceninformationen beinhaltet, wobei die RAN-Kontextinformationen in der Anbindungsanforderung enthalten sind;
Verschlüsseln der SCEF-Kontextinformationen und Senden (303) der verschlüsselten SCEF-Kontextinformationen an den Server in einer Registrierungsanforderung;
Löschen der SCEF-Kontextinformationen;
Erhalten der verschlüsselten SCEF-Kontextinformationen von dem Server, wenn Zieldaten empfangen werden, wobei die Zieldaten mit dem Benutzergerät assoziiert sind;
Entschlüsseln der von dem Server empfangenen verschlüsselten SCEF-Kontextinformationen und Weiterleiten der Zieldaten basierend auf den entschlüsselten SCEF-Kontextinformationen; und
Löschen der SCEF-Kontextinformationen,
wobei das Erhalten und Weiterleiten entweder:
von der MME bzw. an den Server erfolgen; oder
von dem Server bzw. an die MME erfolgen.

10. Verfahren nach Anspruch 9, wobei der Satz von Anweisungen nach dem Senden der SCEF-Kontextinformationen an die MME ferner Anweisungen zum Durchführen der folgenden Schritte umfasst:
Erhalten der RAN-Kontextinformationen von der MME bei Empfang einer durch das Benutzergerät gesendeten Verfolgungsbereichsaktualisierungsanforderung;
Aktualisieren der RAN-Kontextinformationen basierend auf der Verfolgungsbereichsaktualisierungsanforderung, um aktualisierte Kontextinformationen zu erhalten;
Senden der aktualisierten Kontextinformationen an den Server, wodurch bewirkt wird, dass der Server die RAN-Kontextinformationen basierend auf den aktualisierten Kontextinformationen aktualisiert; und
Löschen der aktualisierten Kontextinformationen.

11. Server (700) zur Verwendung in einem Datenübertragungssystem, wobei das Datenübertragungssystem ein Benutzergerät, einen Funkzugangsnetz- bzw. RAN-Knoten, eine Mobilitätsmanagemententität, MME, eine Dienstfähigkeitsoffenlegungsfunktion, SCEF, und den Server umfasst, wobei der Server einen Prozessor (701) und einen Speicher (703) umfasst, der Speicher ausgelegt ist zum Speichern eines Satzes von Anweisungen, der bei Ausführung durch den Prozessor bewirkt, dass der Server die folgenden Schritte durchführt:
Empfangen durch die SCEF gesendeter verschlüsselter SCEF-Kontextinformationen in einer Registrierungsanforderung, wobei die verschlüsselten SCEF-Kontextinformationen eine "Evolved-Packet-System-Bearer"-Kennung, Bedienender-Knoten-Informationen, Anwendungsserverinformationen, eine Adresse der MME und RAN-Kontextinformationen beinhalten, wobei die RAN-Kontextinformationen eine mit dem Benutzergerät, UE, assoziierte Vorrichtungskennung und einen Funkressourcensteuerungs- bzw. RRC-Kontext beinhalten, wobei der RRC-Kontext Standortinformationen des UE und Luftschnittstellenressourceninformationen beinhaltet; und
Speichern der verschlüsselten SCEF-Kontextinformationen;
Liefern der verschlüsselten SCEF-Kontextinformationen an die SCEF;
wobei bezüglich des Lieferns eines der zwei Folgenden gilt:
das Liefern wird durchgeführt, wenn der Server Zieldaten an die SCEF sendet; oder
der Server empfängt nach dem Liefern Zieldaten von der SCEF.

12. Server nach Anspruch 11, wobei der Satz von Anweisungen nach dem Speichern der Zielkontextinformationen ferner Anweisungen zum Durchführen der folgenden Schritte umfasst:
Empfangen durch die SCEF gesendeter aktualisierter SCEF-Kontextinformationen, wobei die aktualisierten SCEF-Kontextinformationen erhalten werden, nachdem die Netzvorrichtung die SCEF-Kontextinformationen basierend auf einer Verfolgungsbereichsaktualisierungsanforderung aktualisiert; und
Aktualisieren der SCEF-Kontextinformationen basierend auf den aktualisierten SCEF-Kontextinformationen.

13. Datenübertragungssystem (800), wobei das Datenübertragungssystem ein Benutzergerät, einen Funkzugangsnetz- bzw. RAN-Knoten nach einem der Ansprüche 7 und 8, eine Dienstfähigkeitsoffenlegungsfunktionsentität, SCEF, nach einem der Ansprüche 9 und 10 und einen Server nach einem der Ansprüche 11 und 12 umfasst.

## Revendications

1. Procédé de transmission de données, mis en œuvre par un nœud de réseau d'accès radio, RAN, dans un système de transmission de données, le système de transmission de données comprenant un équipement utilisateur, un serveur, le nœud RAN, une entité de gestion de mobilité, MME, et une entité à fonction d'exposition de capacité de service, SCEF, et le procédé comprenant :
la réception (301) d'une demande de rattachement provenant de l'équipement utilisateur, UE ;
l'établissement (302) d'informations de contexte RAN qui comprennent un identifiant de dispositif associé à l'UE et un contexte de commande de ressource radio, RRC, le contexte RRC comprenant des informations de localisation de l'UE et des informations de ressources d'interface radio ;
l'envoi (303) des informations de contexte RAN à la MME ;
la suppression (304) des informations de contexte RAN ;
l'obtention (307) des informations de contexte RAN à partir de la MME lorsque des données cibles sont reçues, les données cibles étant associées à l'équipement utilisateur ;
le transfert (308) des données cibles sur la base des informations de contexte RAN ; et
la suppression (309) des informations de contexte RAN,
l'obtention et le transfert étant soit :
à partir de l'UE et vers la MME respectivement ; soit
à partir de la MME et vers l'UE respectivement.

2. Procédé selon la revendication 1, après l'envoi des informations de contexte RAN à la MME, le procédé comprenant en outre :
l'obtention des informations de contexte RAN à partir de la MME lorsqu'une demande de mise à jour de zone de suivi envoyée par l'équipement utilisateur est reçue ;
la mise à jour des informations de contexte RAN sur la base de la demande de mise à jour de zone de suivi pour obtenir des informations de contexte mises à jour ;
l'envoi des informations de contexte mises à jour à la MME, ce qui amène la MME à mettre à jour les informations de contexte RAN sur la base des informations de contexte mises à jour ; et
la suppression des informations de contexte mises à jour.

3. Procédé de transmission de données, mis en œuvre par une entité à fonction d'exposition de capacité de service, SCEF, dans un système de transmission de données, le système de transmission de données comprenant un équipement utilisateur, un serveur, un nœud de réseau d'accès radio, RAN, une entité de gestion de mobilité, MME, et la SCEF, et le procédé comprenant :
la réception (301) d'une demande de rattachement de l'équipement utilisateur, UE, en provenance de la MME ;
l'établissement (302) d'informations de contexte SCEF, qui comprennent un identifiant de support de système par paquets évolué, des informations de nœud de service, des informations de serveur d'application, une adresse de la MME, et des informations de contexte RAN, les informations de contexte RAN comprenant un identifiant de dispositif d'UE et un contexte de commande de ressource radio, RRC, le contexte RRC comprenant des informations de localisation de l'UE et des informations de ressources d'interface radio, les informations de contexte RAN étant comprises dans la demande de rattachement ;
le chiffrage des informations de contexte SCEF et l'envoi (303) des informations de contexte SCEF chiffrées au serveur dans une demande d'enregistrement ;
la suppression (304) des informations de contexte SCEF ;
l'obtention (307) des informations de contexte SCEF chiffrées à partir du serveur lorsque des données cibles sont reçues, les données cibles étant associées à l'équipement utilisateur ;
le déchiffrage des informations de contexte SCEF chiffrées reçues en provenance du serveur et le transfert (308) des données cibles sur la base des informations de contexte SCEF déchiffrées ; et
la suppression (309) des informations de contexte SCEF,
l'obtention et le transfert étant soit :
à partir de la MME et vers le serveur, respectivement ; soit
à partir du serveur et vers la MME, respectivement.

4. Procédé selon la revendication 3, après l'envoi des informations de contexte SCEF à la MME, le procédé comprenant en outre :
l'obtention des informations de contexte RAN à partir de la MME lorsqu'une demande de mise à jour de zone de suivi envoyée par l'équipement utilisateur est reçue ;
la mise à jour des informations de contexte RAN sur la base de la demande de mise à jour de zone de suivi pour obtenir des informations de contexte mises à jour ;
l'envoi des informations de contexte mises à jour au serveur, ce qui amène le serveur à mettre à jour les informations de contexte RAN sur la base des informations de contexte mises à jour ; et
la suppression des informations de contexte mises à jour.

5. Procédé de transmission de données, mis en œuvre par un serveur dans un système de transmission de données, le système de transmission de données comprenant un équipement utilisateur, un nœud de réseau d'accès radio, RAN, une entité de gestion de mobilité, MME, une fonction d'exposition de capacité de service, SCEF, et le serveur, et le procédé comprenant :
la réception (305) d'informations de contexte SCEF chiffrées envoyées par la SCEF, dans une demande d'enregistrement, les informations de contexte SCEF chiffrées comprenant un identifiant de support de système par paquets évolué, des informations de nœud de service, des informations de serveur d'application, une adresse de la MME, et des informations de contexte RAN, les informations de contexte RAN comprenant un identifiant de dispositif associé à l'équipement utilisateur, UE, et un contexte de commande de ressource radio, RRC, le contexte RRC comprenant des informations de localisation de l'UE et des informations de ressources d'interface radio ; et
le stockage (306) des informations de contexte SCEF chiffrées ;
la fourniture (307) des informations de contexte SCEF chiffrées à la SCEF ;
en ce qui concerne la fourniture, l'une des deux conditions suivantes étant remplie :
la fourniture étant réalisée lorsque le serveur envoie des données cibles à la SCEF ; ou
après la fourniture, le serveur recevant des données cibles de la SCEF.

6. Procédé selon la revendication 5, après le stockage des informations de contexte de la cible, le procédé comprenant en outre :
la réception d'informations de contexte SCEF mises à jour envoyées par la SCEF, les informations de contexte SCEF mises à jour étant obtenues après que le dispositif de réseau a mis à jour les informations de contexte SCEF sur la base d'une demande de mise à jour de zone de suivi ; et
la mise à jour des informations de contexte SCEF sur la base des informations de contexte SCEF mises à jour.

7. Nœud de réseau d'accès radio, RAN (600), destiné à être utilisé dans un système de transmission de données, le système de transmission de données comprenant un équipement utilisateur, un serveur, le nœud RAN, une entité de gestion de mobilité, MME, et une entité à fonction d'exposition de capacité de service, SCEF ; le nœud RAN comprenant un processeur (610) et une mémoire (640), la mémoire étant configurée pour stocker un ensemble d'instructions qui, lorsqu'elles sont exécutées par le processeur, amènent le nœud RAN à réaliser les étapes de :
réception d'une demande de rattachement de l'équipement utilisateur, UE ;
établissement d'informations de contexte RAN qui comprennent un identifiant de dispositif de l'UE et un contexte de commande de ressource radio, RRC, le contexte RRC comprenant des informations de localisation de l'UE et des informations de ressources d'interface radio ;
envoi des informations de contexte RAN à la MME ;
suppression des informations de contexte RAN ;
obtention des informations de contexte RAN à partir de la MME lorsque des données cibles sont reçues, les données cibles étant associées à l'équipement utilisateur ;
transfert des données cibles sur la base des informations de contexte RAN ; et
suppression des informations de contexte RAN,
l'obtention et le transfert étant soit :
à partir de l'UE et vers la MME respectivement ; soit
à partir de la MME et vers l'UE respectivement.

8. Nœud RAN selon la revendication 7, après l'envoi des informations de contexte RAN à la MME, l'ensemble d'instructions comprenant en outre des instructions pour réaliser les étapes de :
obtention des informations de contexte RAN à partir de la MME lorsqu'une demande de mise à jour de zone de suivi envoyée par l'équipement utilisateur est reçue ;
mise à jour des informations de contexte RAN sur la base de la demande de mise à jour de zone de suivi pour obtenir des informations de contexte mises à jour ;
envoi des informations de contexte mises à jour à la MME, ce qui amène la MME à mettre à jour les informations de contexte RAN sur la base des informations de contexte mises à jour ; et
suppression des informations de contexte mises à jour.

9. Entité à fonction d'exposition de capacité de service, SCEF, (600) destinée à être utilisée dans un système de transmission de données, le système de transmission de données comprenant un équipement utilisateur, un serveur, un nœud de réseau d'accès radio, RAN, une entité de gestion de mobilité, MME, et la SCEF, la SCEF comprenant un processeur (610) et une mémoire (640), la mémoire étant configurée pour stocker un ensemble d'instructions qui, lorsqu'elles sont exécutées par le processeur, amènent la SCEF à réaliser les étapes de :
réception d'une demande de rattachement de l'équipement utilisateur, UE, à partir de la MME ;
établissement d'informations de contexte SCEF, qui comprennent un identifiant de support de système par paquets évolué, des informations de nœud de service, des informations de serveur d'application, une adresse de la MME, et des informations de contexte RAN, les informations de contexte RAN comprenant un identifiant de dispositif UE et un contexte de commande de ressource radio, RRC, le contexte RRC comprenant des informations de localisation de l'UE et des informations de ressources d'interface radio, les informations de contexte RAN étant comprises dans la demande de rattachement ;
chiffrage des informations de contexte SCEF et envoi (303) des informations de contexte SCEF chiffrées au serveur dans une demande d'enregistrement ;
suppression des informations de contexte SCEF ;
obtention des informations de contexte SCEF chiffrées à partir du serveur lorsque des données cibles sont reçues, les données cibles étant associées à l'équipement utilisateur ;
déchiffrage des informations de contexte SCEF chiffrées reçues à partir du serveur et transfert des données cibles sur la base des informations de contexte SCEF déchiffrées ; et
suppression des informations de contexte SCEF,
l'obtention et le transfert étant soit :
à partir de la MME et vers le serveur, respectivement ; soit
à partir du serveur et vers la MME, respectivement.

10. SCEF selon la revendication 9, après l'envoi des informations de contexte SCEF à la MME, l'ensemble d'instructions comprenant en outre des instructions pour réaliser les étapes de :
obtention des informations de contexte RAN à partir de la MME lorsqu'une demande de mise à jour de zone de suivi envoyée par l'équipement utilisateur est reçue ;
mise à jour des informations de contexte RAN sur la base de la demande de mise à jour de zone de suivi pour obtenir des informations de contexte mises à jour ;
envoi des informations de contexte mises à jour au serveur, ce qui amène le serveur à mettre à jour les informations de contexte RAN sur la base des informations de contexte mises à jour ; et
suppression des informations de contexte mises à jour.

11. Serveur (700) destiné à être utilisé dans un système de transmission de données, le système de transmission de données comprenant un équipement utilisateur, un nœud de réseau d'accès radio, RAN, une entité de gestion de mobilité, MME, une fonction d'exposition de capacité de service, SCEF, et le serveur, le serveur comprenant un processeur (701) et une mémoire (703), la mémoire étant configurée pour stocker un ensemble d'instructions qui, lorsqu'elles sont exécutées par le processeur, amènent le serveur à réaliser les étapes de :
réception d'informations de contexte SCEF chiffrées envoyées par la SCEF, dans une demande d'enregistrement, les informations de contexte SCEF chiffrées comprenant un identifiant de support de système par paquets évolué, des informations de nœud de service, des informations de serveur d'application, une adresse de la MME, et des informations de contexte RAN, les informations de contexte RAN comprenant un identifiant de dispositif associé à l'équipement utilisateur, UE, et un contexte de commande de ressource radio, RRC, le contexte RRC comprenant des informations de localisation de l'UE et des informations de ressources d'interface radio ; et
stockage des informations de contexte SCEF chiffrées ;
fourniture des informations de contexte SCEF chiffrées à la SCEF ;
en ce qui concerne la fourniture, l'une des deux conditions suivantes étant remplie :
la fourniture étant réalisée lorsque le serveur envoie des données cibles à la SCEF ; ou
après la fourniture, le serveur recevant des données cibles en provenance de la SCEF.

12. Serveur selon la revendication 11, après le stockage des informations de contexte de la cible, l'ensemble d'instructions comprenant en outre des instructions pour réaliser les étapes de :
réception d'informations de contexte SCEF mises à jour envoyées par la SCEF, les informations de contexte SCEF mises à jour étant obtenues après que le dispositif de réseau a mis à jour les informations de contexte SCEF sur la base d'une demande de mise à jour de zone de suivi ; et
mise à jour des informations de contexte SCEF sur la base des informations de contexte SCEF mises à jour.

13. Système de transmission de données (800), le système de transmission de données comprenant un équipement utilisateur, un nœud de réseau d'accès radio, RAN, selon l'une quelconque des revendications 7 et 8, une entité à fonction d'exposition de capacité de service, SCEF, selon l'une quelconque des revendications 9 et 10 et un serveur selon l'une quelconque des revendications 11 et 12.
